(19) Europäisches Patentamt
European Patent Office
Office européen des brevets

(11)  EP 3 081 067 B1

(12)  **EUROPÄISCHE PATENTSCHRIFT**

(45) Veröffentlichungstag und Bekanntmachung des Hinweises auf die Patenterteilung:
**22.08.2018  Patentblatt 2018/34**

(51) Int Cl.:
***A01C 17/00*** *(2006.01)*

(21) Anmeldenummer: **16000769.6**

(22) Anmeldetag: **04.04.2016**

(54) **VERFAHREN ZUR REGELUNG DES STREUGUT-MASSENSTROMES VON SCHEIBENSTREUERN, SCHEIBENSTREUER UND VERWENDUNG EINES VERTEILERSCHEIBENSATZES HIERFÜR**

METHOD FOR CONTROLLING THE MASS FLOW OF SPREADING MATERIAL FROM DISC SPREADERS, DISC SPREADER AND USE OF A DISTRIBUTOR DISC SET THEREFORE

PROCÉDÉ DE RÉGLAGE DU DÉBIT DE MATIÈRE D'ÉPANDAGE À PARTIR D'UN ÉPANDEUR À DISQUES, ÉPANDEUR À DISQUES ET UTILISATION DES DISQUES RÉPARTITEURS CORRESPONDANTS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.04.2015  DE 102015004514**

(43) Veröffentlichungstag der Anmeldung:
**19.10.2016  Patentblatt 2016/42**

(73) Patentinhaber: **RAUCH Landmaschinenfabrik GmbH**
**76547 Sinzheim (DE)**

(72) Erfinder: **Rauch, Norbert**
**76547 Sinzheim (DE)**

(74) Vertreter: **Lichti - Patentanwälte Partnerschaft mbB**
**Postfach 41 07 60**
**76207 Karlsruhe (DE)**

(56) Entgegenhaltungen:
**EP-A1- 0 963 690          DE-A1- 19 825 917**
**DE-A1-102007 051 713    DE-U1-202012 002 455**

**Beschreibung**

Die Erfindung betrifft ein Verfahren zur Regelung des Ist-Massenstromes an Streugut wenigstens eines regelbaren Dosierorgans eines Scheibenstreuers mit wenigstens einer, dem Dosierorgan zugeordneten und mit wenigstens einer Wurfschaufel versehenen Verteilerscheibe, wobei ein Soll-Massenstrom an Streugut in Abhängigkeit wenigstens eines Parameters aus der Gruppe

- Fahrgeschwindigkeit des Scheibenstreuers;
- Soll-Streumenge pro Fläche; und
- Arbeitsbreite

ermittelt und dieser Soll-Massenstrom einem rechnergestützten Regelgerät als Führungsgröße eingegeben wird, wobei ferner als Regelgröße das für den Ist-Massenstrom repräsentative Drehmoment wenigstens einer Welle in einem Antriebsstrang der Verteilerscheibe sensorisch ermittelt und an das Regelgerät übermittelt wird, woraufhin die Abweichung des Ist-Massenstromes an Streugut von dem Soll-Massenstrom an Streugut ermittelt und eine für die Öffnungsstellung des Dosierorgans repräsentative Stellgröße generiert wird, um das Dosierorgan auf den Soll-Massenstrom nachzuregeln, wobei

(a) in einer dem Regelgerät zugeordneten Speichereinrichtung wenigstens ein erster funktionaler Zusammenhang zwischen dem Drehmoment einer ersten, mit wenigstens einer Wurfschaufel versehenen Verteilerscheibe und dem auf die erste Verteilerscheibe auftreffenden Massenstrom an Streugut bei wenigstens einer vorgegebenen Drehzahl dieser Verteilerscheibe während des Betriebs abgespeichert ist, wobei der erste funktionale Zusammenhang einen ersten Geometriefaktor der ersten Verteilerscheibe berücksichtigt; und
(b) in der dem Regelgerät zugeordneten Speichereinrichtung

- wenigstens ein zweiter funktionaler Zusammenhang zwischen dem Drehmoment einer zweiten, mit wenigstens einer Wurfschaufel versehenen Verteilerscheibe und dem auf die zweite Verteilerscheibe auftreffenden Massenstrom an Streugut bei wenigstens einer vorgegebenen Drehzahl dieser Verteilerscheibe während des Betriebs abgespeichert ist, oder
- wenigstens ein Umrechnungsfaktor abgespeichert ist, welcher eine Umrechnung des wenigstens einen ersten funktionalen Zusammenhangs zwischen dem Drehmoment der ersten Verteilerscheibe und dem auf die erste Verteilerscheibe auftreffenden Massenstrom an Streugut in wenigstens einen zweiten funktionalen Zusammenhang zwischen dem Drehmoment einer zweiten Verteilerscheibe und dem auf die zweite Verteilerscheibe auftreffenden Massenstrom an Streugut bei wenigstens einer vorgegebenen Drehzahl dieser Verteilerscheibe während des Betriebs ermöglicht,

wobei der zweite funktionale Zusammenhang einen von dem ersten Geometriefaktor verschiedenen, zweiten Geometriefaktor der zweiten Verteilerscheibe berücksichtigt;
wobei ferner

(c) der jeweilige funktionale Zusammenhang, welcher den jeweiligen Geometriefaktor einer jeweiligen Verteilerscheibe berücksichtigt, oder der jeweilige Umrechnungsfaktor hierfür in Abhängigkeit einer für die jeweilige Verteilerscheibe repräsentativen Information, welche an das Regelgerät übermittelt wird, ausgewählt wird; und
(d) die jeweilige Verteilerscheibe in Abhängigkeit wenigstens einer für diese Verteilerscheibe geeigneten Streubreite und/oder Arbeitsbreite ausgewählt wird.

Die Erfindung bezieht sich ferner auf einen insbesondere zur Durchführung eines solchen Verfahrens geeigneten Scheibenstreuer mit wenigstens einer Verteilerscheibe, welche mit wenigstens einer Wurfschaufel versehen und austauschbar an einer Welle des Scheibenstreuers montiert ist, und mit wenigstens einem der Verteilerscheibe zugeordneten, von einem rechnergesteuerten Regelgerät regelbaren Dosierorgan, wobei das Regelgerät einerseits mit wenigstens einem Sensor zur Erfassung des für den Ist-Massenstrom repräsentativen Drehmomentes wenigstens einer Welle in einem Antriebsstrang der Verteilerscheibe als Regelgröße, andererseits mit einer Eingabeeinrichtung in Wirkverbindung steht und das Regelgerät zur Ermittlung der Abweichung des Ist-Massenstromes an Streugut von einem als Führungsgröße dienenden Soll-Massenstrom ausgebildet ist, welcher in die Eingabeeinrichtung des Regelgerätes eingebbar ist und/oder welchen das Regelgerät in Abhängigkeit wenigstens eines in dessen Eingabeeinrichtung eingebbaren Parameters aus der Gruppe

- Fahrgeschwindigkeit des Scheibenstreuers;
- Soll-Streumenge pro Fläche; und

- Arbeitsbreite

ermittelt, und wobei das Regelgerät ferner zur Generierung einer für die Öffnungsstellung des Dosierorgans repräsentativen Stellgröße ausgebildet ist, um das Dosierorgan auf den Soll-Massenstrom nachzuregeln, wobei

(a) in einer dem Regelgerät zugeordneten Speichereinrichtung wenigstens ein erster funktionaler Zusammenhang zwischen dem Drehmoment einer ersten, mit wenigstens einer Wurfschaufel versehenen Verteilerscheibe und dem auf die erste Verteilerscheibe auftreffenden Massenstrom an Streugut bei wenigstens einer vorgegebenen Drehzahl dieser Verteilerscheibe während des Betriebs abgespeichert ist, wobei der erste funktionale Zusammenhang einen ersten Geometriefaktor der ersten Verteilerscheibe berücksichtigt; und
(b) in der dem Regelgerät zugeordneten Speichereinrichtung

- wenigstens ein zweiter funktionaler Zusammenhang zwischen dem Drehmoment einer zweiten, mit wenigstens einer Wurfschaufel versehenen Verteilerscheibe und dem auf die zweite Verteilerscheibe auftreffenden Massenstrom an Streugut bei wenigstens einer vorgegebenen Drehzahl dieser Verteilerscheibe während des Betriebs abgespeichert ist, oder
- wenigstens ein Umrechnungsfaktor abgespeichert ist, welcher eine Umrechnung des wenigstens einen ersten funktionalen Zusammenhangs zwischen dem Drehmoment der ersten Verteilerscheibe und dem auf die erste Verteilerscheibe auftreffenden Massenstrom an Streugut in wenigstens einen zweiten funktionalen Zusammenhang zwischen dem Drehmoment einer zweiten Verteilerscheibe und dem auf die zweite Verteilerscheibe auftreffenden Massenstrom an Streugut bei wenigstens einer vorgegebenen Drehzahl dieser Verteilerscheibe während des Betriebs ermöglicht,

wobei der zweite funktionale Zusammenhang einen von dem ersten Geometriefaktor verschiedenen, zweiten Geometriefaktor der zweiten Verteilerscheibe berücksichtigt; wobei ferner
(c) das Regelgerät zum Empfang einer für die jeweilige Verteilerscheibe repräsentativen Information ausgebildet ist, um den jeweiligen funktionalen Zusammenhang, welche den jeweiligen Geometriefaktor einer jeweiligen Verteilerscheibe berücksichtigt, oder den jeweiligen Umrechnungsfaktor hierfür in Abhängigkeit der für die jeweilige Verteilerscheibe repräsentativen Information auszuwählen; und
(d) der für eine jeweilige Verteilerscheibe in der Speichereinrichtung des Regelgerätes hinterlegte funktionale Zusammenhang, welcher den jeweiligen Geometriefaktor einer jeweiligen Verteilerscheibe berücksichtigt, oder der jeweilige Umrechnungsfaktor hierfür wenigstens eine für die jeweilige Verteilerscheibe geeignete Streubreite und/oder Arbeitsbreite berücksichtigt.

Schließlich betrifft die Erfindung die Verwendung eines Verteilerscheibensatzes, umfassend

- wenigstens eine erste, mit wenigstens einer Wurfschaufel versehene Verteilerscheibe, welche einen ersten Geometriefaktor aufweist, welcher durch den Quotienten ihres Drehmomentes geteilt durch den auf diese Verteilerscheibe auftreffenden Massenstrom an Streugut bei einer vorgegebenen Drehzahl während des Betriebs definiert ist; und
- wenigstens eine zweite, mit wenigstens einer Wurfschaufel versehene Verteilerscheibe, welche einen von dem ersten Geometriefaktor der ersten Verteilerscheibe verschiedenen, zweiten Geometriefaktor aufweist, welcher gleichfalls durch den Quotienten ihres Drehmomentes geteilt durch den auf diese Verteilerscheibe auftreffenden Massenstrom an Streugut bei einer vorgegebenen Drehzahl während des Betriebs definiert ist,

für einen derartigen Scheibenstreuer, insbesondere zur Durchführung eines Verfahrens der vorgenannten Art. Derartige Scheibenstreuer finden insbesondere in Form von Zweischeiben-Düngerstreuern in der Landwirtschaft zur Verteilung von Streugut, wie mineralischem und organischem Dünger und dergleichen, aber auch in Form von Winterdienststreuern zur Verteilung von Streusalz und/oder Splitt verbreiteten Einsatz. Ihre Vorteile liegen dabei vornehmlich in ihrer einfachen Bedienbarkeit und hohen Leistungsfähigkeit bei verhältnismäßig geringen Investitionskosten. Insbesondere im Falle von landwirtschaftlichen Scheibenstreuern haben sich vornehmlich Zweischeiben-Düngerstreuer etabliert, welche mit einem Paar von Verteilerscheiben mit diesen zugeordneten Dosierorganen ausgestattet sind.
Um für die gewünschte Verteilung des Streugutes auf dem Boden zu sorgen, lassen sich bei gattungsgemäßen Scheibenstreuern einerseits die Dosierung des Massenstromes des Streugutes auf die einem jeweiligen Dosierorgan zugeordnete Verteilerscheibe, andererseits die Verteilung des Streugutes durch die Verteilerscheibe(n) einstellen bzw. regeln. Für letzteres ist es üblich, Einstellmittel zum Einstellen des Scheibenstreuers auf verschiedene Arbeitsbreiten, Streugüter und/oder Verteilarten vorzusehen.
Darüber hinaus hat es sich in der Praxis bewährt, für verschiedene Streu- bzw. Arbeitsbreiten(intervalle) Verteilerscheibensätze mit einer Mehrzahl an verschiedenen Verteilerscheiben und/oder an mit verschiedenen Wurfschaufeln versehenen Verteilerscheiben einzusetzen, da es für die Qualität des Streuergebnisses bei mit umlaufenden Verteilerscheiben ausgerüsteten, gattungsgemäßen Scheibenstreuern auf eine möglichst gleichmäßige Verteilung des Streugutes auf dem Boden ankommt, wie beispielsweise der zu bestreuenden Fläche eines Feldes, was mittels ein und derselben Verteilerscheibe für sehr unterschiedliche Streu- bzw. Arbeitsbreiten nicht zu bewerkstelligen ist. Nachdem die umlaufende Verteilerscheibe das dieser von ihrer Dosiereinrichtung aufgegebene Streugut zum Scheibenumfang hin beschleunigt worden ist, wird es bekanntlich fächerartig über einen bestimmten Abwurfbereich abgeschleudert, wonach das Streugut dann mit Abstand von der Verteilerscheibe in einem im wesentlichen ringsegmentförmigen Bereich, dem sogenannten Streuringsektor, auf den Boden fällt. Dabei ist die Massenverteilung des Streugutes quer zur Fahrtrichtung des Streuers, also über seine Streubreite hinweg, nicht gleichmäßig, sondern nimmt die Massenverteilung in aller Regel von einem Maximum im mittleren Bereich zu beiden Seiten, nämlich den mit Bezug auf die Verteilerscheibe im Wesentlichen radialen Begrenzungen, ab. Durch die Anordnung von zwei gegenläufig angetriebenen Verteilerscheiben nebeneinander, wie sie bei Zweischeibenstreuern üblich sind, lässt sich die Querverteilung des Streugutes im Bereich zwischen den Verteilerscheiben sowie in nahem Lateralabstand von denselben vergleichmäßigen, fällt aber gleichwohl zu beiden Seiten des so erhaltenen, gesamten Streubildes ab, wobei dies bei Düngerstreuern durch das sogenannte Anschlussfahren ausgeglichen wird, indem die Streubilder im Randbereich überlappt werden. Es ergibt sich hier folglich eine Arbeitsbreite, welche dem Abstand der beim Anschlussfahren genutzten Fahrgassen entspricht und welche grundsätzlich kleiner ist als die (gesamte) Streubreite, welche beispielsweise etwa doppelt so groß wie die Arbeitsbreite sein kann. In anderen Anwendungsfällen, wie insbesondere bei Winterdienststreuern, wird hingegen versucht, ein möglichst steilflankiges Streubild zu erreichen, da ein Anschlussfahren hier nicht möglich ist.

Als Maß, ob eine Verteilerscheibe für eine jeweilige Streu- bzw. Arbeitsbreite geeignet ist, wird üblicherweise der sogenannte Variationskoeffizient, insbesondere der Querverteilung, herangezogen, welcher für eine jeweilige Verteilerscheibe für ein jeweiliges, mit dieser auszubringendes Streugut im Bereich der jeweiligen Arbeitsbreite ein Minimum aufweisen sollte und für die jeweilige Arbeitsbreite maximal etwa 15%, vorzugsweise maximal etwa 10%, betragen sollte, wobei sich die vorgenannten Werte auf das Anschlussfahren im Feldinnern beziehen, während der Variationskoeffizient im Bereich der sogenannten Übergangsbreite, d.h. in einem Bereich vom Feldrand bis etwa zur Mitte zwischen der zweiten und dritten Fahrgasse, demgegenüber auch größer sein und vorzugsweise maximal 25% betragen sollte. Der Variationskoeffizient stellt dabei die mittlere prozentuale Abweichung der Streumenge von ihrem Sollwert dar und ist somit eine dimensionslose Zahl.

In Bezug auf die Dosierung des Streugutes hat es sich bewährt, dass ein rechnergestütztes Regelgerät einen Soll-Massenstrom an zu verteilendem Streugut aus einem oder insbesondere mehreren wählbaren Parametern, wie der aktuellen Fahrgeschwindigkeit, der Soll-Streumenge pro Flächeneinheit, der gewünschten Arbeitsbreite etc., ermittelt und das Dosierorgan gemäß dem derart ermittelten Soll-Massenstrom regelt, was beispielsweise anhand wenigstens einer oder mehrerer in dem Rechner hinterlegten Kennlinien oder -kurven geschehen kann, welche die Korrelation des jeweiligen Parameters mit dem zugehörigen Massenstrom an Streugut beschreiben.

Was die Streugutdosierung betrifft, so haben sich insbesondere zwei verschiedene Varianten zur Messung und Regelung des Ist-Massenstromes an Streugut durchgesetzt:

Gemäß einer ersten Variante zur Messung und Regelung des auf die Verteilerscheibe aufgegebenen Ist-Massenstromes an Streugut wird der gesamte Streugutbehälter des Scheibenstreuers fortwährend, d.h. auch während der Fahrt, mittels Wiegezellen gewogen, so dass sich aus dem pro Zeiteinheit ermittelten Gewichtsverlust der tatsächliche Massenstrom des Streugutes errechnen lässt (EP 0 982 571 A1). Von Vorteil ist hierbei insbesondere die universelle Verwendbarkeit einer solchen Messanordnung unabhängig von einem hydraulischen oder mechanischen Antrieb der Verteilerscheibe. Als nachteilig hat sich indes einerseits erwiesen, dass mit einer solchen Wiegetechnik nur der gesamte Massenstrom an Streugut ermittelt werden kann, was es im Falle eines Zweischeibenstreuers, bei welchem die Verteilerscheiben häufig mit unterschiedlichen Massenströmen an Streugut beaufschlagt werden müssen (sofern z.B. eine unterschiedliche Streubreite auf beiden Seiten erwünscht ist), unmöglich macht, die einzelnen Massenströme (pro Verteilerscheibe) zu ermitteln. Andererseits ist das mit Wiegezellen ausgestattete System verhältnismäßig träge, weil die pro Zeiteinheit dosierte Masse des Streugutes im Verhältnis zu der Gesamtmasse des Streugutbehälters sehr klein ist und daher eine zeitlich relativ lange Mittelung der von den Wiegezellen ermittelten Messwerte erforderlich ist. Dies ist um so problematischer, je erschütterungsintensiver die Fahrt des Scheibenstreuers auf unebenem Untergrund vonstatten geht.

Gemäß einer der vorgenannten ersten Variante hinsichtlich Messgenauigkeit und Störanfälligkeit deutlich überlegenen zweiten Variante wird zur Messung und Regelung des Massenstromes an Streugut das für diesen Massenstrom repräsentative Drehmoment in einem Antriebsstrang eines Antriebs der bzw. einer jeden Verteilerscheibe ermittelt, welches sich daraus ergibt, dass das auf die Verteilerscheibe(n) auftreffende Streugut mittels deren Wurfschaufeln von der Scheibe fort beschleunigt wird. Die DE 198 25 917 A1 beschreibt einen gattungsgemäßen Scheibenstreuer zum Verteilen von Streugut mit variabler Arbeitsbreite und bei variabler Fahrzeuggeschwindigkeit, welcher einen Vorratsbehälter, eine oder zwei rotatorisch angetriebene Verteilerscheibe(n) mit Wurfschaufeln, Mittel zum Einstellen des Scheibenstreuers auf verschiedene Arbeitsbreiten und Düngersorten sowie verstellbare Dosierorgane aufweist, welche von einem rechnergestützten Regelgerät steuerbar sind. In den Rechner sind die Fahrgeschwindigkeit, die Sollstreumenge pro Fläche, also der Soll-Massenstrom, und die Arbeitsbreite eingebbar. Ferner sind in dem Rechner für jede Einstellung der Einstellmittel Kennlinien für die Beziehung zwischen dem sensorisch erfassten Drehmoment der Verteilerscheibe und dem Soll-Massenstrom in Abhängigkeit von der Drehzahl einschließlich einer Leerlauf-Kennlinie für den Massenstrom null hinterlegt. Mittels je eines Sensors werden das Drehmoment und die Drehzahl des Rotationsantriebs aufgenommen. Die Ausgangsgröße des Drehmomentsensors vergrößert sich mit zunehmendem Ist-Massenstrom. Nach Abgleich mit dem Soll-Massenstrom unter gleichzeitiger Kompensation eventueller Drehzahlschwankungen wird die Abweichung als Stellgröße für das Dosierorgan genutzt. Während bei einem hydraulischen Antrieb der Verteilerscheibe(n) der Druckabfall des Hydromotors sensorisch ermittelt wird (vgl. z.B. die DE 198 13 289 B4), wird bei einem elektrischen Antrieb der Verteilerscheibe(n) die Stromaufnahme des Elektromotors sensorisch erfasst. Im Falle eines mechanischen Antriebs der Verteilerscheibe(n) kommen Dehnungsmessstreifen und/oder Schleifkontakt zum Einsatz.

Die EP 0 963 690 A1, welche die Priorität der vorgenannten DE 198 25 917 A1 in Anspruch nimmt, beschreibt einen ähnlichen Scheibenstreuer, wobei zur Ermittlung des Drehmomentes der Verteilerscheiben im Falle eines mechanischen Antriebs derselben ferner zwei auf einer Querwelle, welche die jeweiligen, die Verteilerscheiben tragenden, vertikalen Wellen über Kegelzahnräder antreibt, mit Abstand angeordnete Inkrementalgeber vorgesehen sind, welchen Impulsaufnehmer zugeordnet sind, um die Torsion der Welle bzw. das hierfür repräsentative Drehmoment zu erfassen. Im Leerlauf, d.h. ohne Beaufschlagung der Verteilerscheiben bei geschlossenem Dosierorgan, ergibt sich folglich einerseits ein Maß für das Leerlaufdrehmoment, während andererseits im Falle einer Beaufschlagung der Verteilerscheiben mit einem Soll-Massenstrom an Streugut die Impulsaufnehmer eine Phasenverschiebung erkennen, welche für das Gesamtdrehmoment, welches aus der Subtraktion des Leerlaufdrehmomentes von dem Ist-Massenstrom-Drehmoment resultiert, repräsentativ ist. Ferner sind zur Erfassung des Drehmomentes der Verteilerscheibe(n) Torsionssensoren denkbar, wie sie beispielsweise aus der EP 2 625 945 A1 bekannt sind.

Nachdem jede Verteilerscheiben- bzw. jeder Wurfschaufeltyp derselben in Abhängigkeit der Geometrie ein unterschiedliches Drehmoment bewirkt, welches für einen bestimmten, auf die jeweilige - in Rotation versetzte - Verteilerscheibe auftreffenden Massenstrom an Streugut repräsentativ ist, müssen in der Speichereinrichtung des zur Reglung des Dosierorgans dienenden Regelgerätes des Scheibenstreuers eine Mehrzahl an funktionalen Abhängigkeiten zwischen dem Drehmoment der jeweiligen Verteilerscheibe einerseits und dem hierfür verantwortlichen Massenstrom an Streugut andererseits hinterlegt sein, damit das Regelgerät "weiß", welches sensorisch erfasste Drehmoment für den jeweils gewünschten Soll-Massenstrom an Streugut das "richtige" ist und auf diese Weise den indirekt über das Drehmoment sensorisch erfassten Ist-Massenstrom an Streugut stets auf den in das Regelgerät eingegebenen oder von diesem errechneten Soll-Massenstrom nachzuregeln. In diese funktionalen Abhängigkeiten zwischen dem Massenstrom und dem Drehmoment verschiedener Verteilerscheiben, welche sich in einigen Fällen auch mittels Umrechnungsfaktoren ineinander umrechnen lassen, geht folglich auch ein Geometriefaktor einer jeweiligen Verteilerscheibe ein, welcher den Zusammenhang zwischen dem Drehmoment und dem Massenstrom dieser Verteilerscheibe bei einer bestimmten Drehzahl derselben beschreibt. Darüber hinaus muss dass Regelgerät mit Informationen versorgt werden, mit welcher/welchen Verteilerscheibe(n) der Scheibenstreuer gerade bestückt ist, um die für die jeweils eingesetzte Verteilerscheibe, welche für die jeweils gewünschte Arbeitsbreite geeignet ist, geltende funktionale Abhängigkeit zwischen dem Drehmoment und dem Massenstrom, welche - wie gesagt - die Geometrie dieser Verteilerscheibe notwendigerweise berücksichtigt, auszuwählen und den Ist-Massenstrom auf den Soll-Massenstrom nachzuregeln.

Obgleich moderne Drehmomentsensoren, wie beispielsweise solche gemäß der oben zitierten EP 2 625 945 A1, eine sehr hohe Messgenauigkeit und eine hohe Empfindlichkeit aufweisen, besteht bei kleinen Streu- bzw. Arbeitsbreiten und dabei ausgebrachten, nur sehr kleinen Massenströmen an Streugut nach wie vor ein Problem darin, dass die Messgenauigkeit ab einem gewissen Mindestmassenstrom, welcher ein Drehmoment erzeugt, das nicht mehr eindeutig von dem "Grundrauschen" des Leerlaufdrehmomentes unterschieden werden kann, nicht mehr gegeben ist, so dass der minimalen Ausbringmenge an Streugut nach unten hin Grenzen gesetzt sind.

Schließlich ist es auch bekannt, bei der Ermittlung der Drehmoment-/Massenstromkennlinien für die Steuerung bzw. Regelung des Massenstromes an ausgebrachtem Streugut motorspezifische Parameter des Antriebs der Verteilerscheiben zu berücksichtigen (DE 20 2012 002 455 U1).

Der Erfindung liegt daher die Aufgabe zugrunde, ein Verfahren und einen zur Durchführung eines solchen Verfahrens geeigneten Scheibenstreuer der eingangs genannten Art auf einfache und kostengünstige Weise dahingehend weiterzubilden, dass die Mess- und damit die Regelgenauigkeit des Dosierorgans auch im Falle sehr kleiner Massenströme an Streugut bei kleinen Streu- bzw. Arbeitsbreiten verbessert wird. Sie ist ferner auf einen hierfür geeigneten Verteilerscheibensatz gerichtet, welcher zur Durchführung eines solchen Verfahrens mittels eines solchen Scheibenstreuers Verwendung finden kann.

In verfahrenstechnischer Hinsicht wird diese Aufgabe bei einem gattungsgemäßen Verfahren zur Regelung des Ist-Massenstromes an Streugut dadurch gelöst, dass für wenigstens eine kleine Streubreite von kleiner etwa 38 m, insbesondere von kleiner etwa 35 m, und/oder für wenigstens eine kleine Arbeitsbreite von kleiner etwa 18 m, insbesondere von zwischen etwa 12 m und etwa 16 m, eine mit wenigstens einer Wurfschaufel versehene Verteilerscheibe ausgewählt wird, welche einen durch den Quotienten ihres Drehmomentes (M) geteilt durch den auf diese Verteiler-scheibe auftreffenden Massenstrom (ṁ) an Streugut während des Betriebs definierten Geometriefaktor von wenigstens etwa 0,1 (Nm)/(kg/min) bei einer Drehzahl von 900 U/min aufweist, wobei als Verteilerscheibe mit dem Geometriefaktor von wenigstens 0,1 (Nm)/(kg/min) bei einer Drehzahl von 900 U/min eine Verteilerscheibe verwendet wird, welche einen Abwurfwinkel von maximal 5° und einen Flugkreisdurchmesser von mindestens 60 cm aufweist.

In vorrichtungstechnischer Hinsicht sieht die Erfindung zur Lösung dieser Aufgabe bei einem Scheibenstreuer der eingangs genannten Art ferner vor, dass in der dem Regelgerät zugeordneten Speichereinrichtung für wenigstens eine kleine Streubreite von kleiner etwa 38 m, insbesondere von kleiner etwa 35 m, und/oder für wenigstens eine kleine Arbeitsbreite von kleiner etwa 18 m, insbesondere zwischen etwa 12 m und etwa 16 m,

- wenigstens ein funktionaler Zusammenhang zwischen dem Drehmoment einer für eine solche Streu- und/oder Arbeitsbreite geeigneten, mit wenigstens einer Wurfschaufel versehenen Verteilerscheibe und dem auf diese Verteilerscheibe auftreffenden Massenstrom, oder
- wenigstens ein Umrechnungsfaktor, welcher den wenigstens einen ersten abgespeicherten funktionalen Zusammenhang der ersten Verteilerscheibe in wenigstens einen funktionalen Zusammenhang zwischen dem Drehmoment einer für eine solche Streu- und/oder Arbeitsbreite geeigneten Verteilerscheibe und dem auf diese Verteilerscheibe auftreffenden Massenstrom umrechnet,

abgespeichert ist, wobei der funktionale Zusammenhang der für eine solche Streu- und/oder Arbeitsbreite geeigneten, mit wenigstens einer Wurfschaufel versehenen Verteilerscheibe einen durch den Quotienten des Drehmomentes dieser Verteilerscheibe geteilt durch den auf diese Verteilerscheibe auftreffenden Massenstrom an Streugut während des Betriebs definierten Geometriefaktor von wenigstens 0,1 (Nm)/(kg/min) bei einer Drehzahl von 900 U/min berücksichtigt, wobei die Verteilerscheibe mit dem Geometriefaktor von wenigstens 0,1 (Nm)/(kg/min) bei einer Drehzahl von 900 U/min einen Abwurfwinkel von maximal 5° und einen Flugkreisdurchmesser von mindestens 60 cm aufweist.

Schließlich sieht die Erfindung zur Lösung der ihr zugrundeliegenden Aufgabe bei einer Verwendung eines Verteilerscheibensatzes der eingangs genannten Art vor, dass wenigstens eine, mit wenigstens einer Wurfschaufel versehene Verteilerscheibe des Verteilerscheibensatzes, welche einen durch den Quotienten ihres Drehmomentes geteilt durch den auf diese Verteilerscheibe auftreffenden Massenstrom an Streugut definierten Geometriefaktor von mindestens etwa 0,1 (Nm)/(kg/min) bei einer Drehzahl von 900 U/min aufweist, für eine Streubreite von kleiner etwa 38 m, insbesondere von kleiner etwa 35 m, und/oder für eine Arbeitsbreite von kleiner etwa 18 m, insbesondere von zwischen etwa 12 m und etwa 16 m, verwendet wird, wobei die wenigstens eine Verteilerscheibe, welche einen durch den Quotienten ihres Drehmomentes (M) geteilt durch den auf diese Verteilerscheibe auftreffenden Massenstrom (ṁ) an Streugut definierten Geometriefaktor von mindestens 0,1 (Nm)/(kg/min) bei einer Drehzahl von 900 U/min aufweist, einen Abwurfwinkel von maximal 5° und einen Flugkreisdurchmesser von mindestens 60 cm aufweist.

Die Erfindung beruht folglich auf dem Grundprinzip, bei der Auswahl der für eine kleine Streu- bzw. Arbeitsbreite geeigneten Verteilerscheibe bzw. bei der Auswahl der in der Speichereinrichtung des Regelgerätes für eine solche Streu- bzw. Arbeitsbreite und für eine solche Verteilerscheibe abgespeicherten funktionalen Abhängigkeit zwischen dem Drehmoment und dem Soll-Massenstrom, welche den Geometriefaktor dieser Verteilerscheibe berücksichtigt, nicht nur - wie bislang im Stand der Technik üblich - den Variationskoeffizienten dieser Verteilerscheibe, welcher für eine gleichmäßige Querverteilung des Streugutes sorgt, zu berücksichtigen, sondern auch den durch den Quotienten des Drehmomentes (M) einer solchen Verteilerscheibe geteilt durch den auf diese Verteilerscheibe auftreffenden Massenstrom (ṁ) an Streugut definierten Geometriefaktor, wobei dieser Geometriefaktor erfindungsgemäß einen Wert von wenigstens etwa 0,1 (Nm)/(kg/min) bei einer üblichen Drehzahl (n) von 900 U/min aufweist:

$$\text{Geometriefaktor} = M/\dot{m} \geq 0{,}1 \ (Nm)/(kg/min) \ \text{bei } n = 900 \ U/min$$

Auf diese Weise wird für gattungsgemäße Scheibenstreuer, deren Massenstromregelung auf einer sensorischen Erfassung des für den Ist-Massenstrom repräsentativen Drehmomentes der Verteilerscheibe beruht, sichergestellt, dass auch bei sehr kleinen Ist-Massenströmen an Streugut ein hinreichendes Drehmoment sensorisch erfasst werden kann, um den Ist-Massenstrom auf den sehr kleinen Soll-Massenstrom zu regeln. Die genannten Streu- bzw. Arbeitsbreiten beziehen sich dabei auf Streugut mit sehr guten Flugeigenschaften, wie insbesondere handelsüblichem Kalkammonsalpeter in granulierter Form.

Gemäß dem erfindungsgemäßen Verfahren ist dabei vorgesehen, dass als Verteilerscheibe mit dem Geometriefaktor von wenigstens etwa 0,1 (Nm)/(kg/min) bei einer Drehzahl von 900 U/min eine Verteilerscheibe verwendet wird, welche

- einen Abwurfwinkel von maximal etwa 5°, insbesondere von maximal etwa 3°, und
- einen Flugkreisdurchmesser von mindestens etwa 60 cm, insbesondere von mindestens 65 cm,

aufweist. Folglich weist bei einem erfindungsgemäßen Scheibenstreuer die Verteilerscheibe mit dem Geometriefaktor von wenigstens etwa 0,1 (Nm)/(kg/min) bei einer Drehzahl von 900 U/min

- einen Abwurfwinkel von maximal 5°, insbesondere von maximal 3°, und
- einen Flugkreisdurchmesser von mindestens 60 cm, insbesondere von mindestens 65 cm,

auf. Bei einer solchermaßen ausgestalteten Verteilerscheibe lässt sich der für eine hohe Empfindlichkeit der Massenstromregelung des Dosierorgans als hinreichend gefundene Geometriefaktor, welcher mindestens etwa 0,1 (Nm)/(kg/min) bei einer Drehzahl von 900 U/min beträgt, auf einfache Weise dadurch erreichen, dass der Abwurfwinkel, welcher üblicherweise entweder durch eine konvexe, im Wesentlichen "topfförmige" Gestalt des Scheibenkörpers oder durch eine entsprechende Schrägstellung der Wurfschaufel(n) mit hieran angeordneten Leitkörpern, auf welchen die Streugutpartikel nach oben beschleunigt werden, implementiert ist, gegenüber dem Stand der Technik sehr klein gewählt wird, wodurch es möglich wird, den Flugkreisdurchmesser der Verteilerscheibe, welcher durch den Abstand zwischen den äußeren Enden der Wurfschaufeln implementiert ist, gegenüber dem Stand der Technik zu vergrößern. Folglich wird der "Hebelarm" der auf die rotierende Verteilerscheibe infolge des auf diese herabfallenden Massenstromes an Streugut wirkenden Kraft vergrößert und wird folglich das sensorisch erfasste Drehmoment insgesamt erhöht, um auch bei sehr kleinen, mittels des Dosierorgans dosierten Massenströmen an Streugut, wie sie gerade bei kleinen Arbeitsbreiten oftmals erwünscht sind, für die notwendige Empfindlichkeit der Massenstromregelung zu sorgen.

Mit "Streubreite" ist im Rahmen der vorliegenden Offenbarung im Übrigen die Gesamtbreite des ausgebrachten Streugutes quer zur Fahrtrichtung des Scheibenstreuers angesprochen. Die "Arbeitsbreite" bezieht sich im Rahmen der vorliegenden Offenbarung auf den Abstand der auf einem Feld angelegten Fahrgassen, welche der Scheibenstreuer durchfährt, um durch teilweise Überlappung der Streubreiten eine gleichmäßige Streugutverteilung zu erzielen. Im Falle eines Winterdienst-Scheibenstreuers, welcher die zu bestreuende Straße oder den zu bestreuenden Weg nur einmalig durchfährt, entspricht die Streubreite der Arbeitsbreite.

Die für die jeweilige Verteilerscheibe repräsentative Information, welche an das Regelgerät übermittelt wird und welche dazu dient, dem Regelgerät "mitzuteilen", mit welcher Verteilerscheibe der Scheibenstreuer gerade bestückt ist, um den entsprechenden, von dem Geometriefaktor einer jeweiligen Verteilerscheibe abgängigen funktionalen Zusammenhang zwischen dem Drehmomentes und dem Massenstrom auswählen zu können, kann beispielsweise

- in eine dem Regelgerät zugeordnete Eingabeeinrichtung, beispielsweise manuell, eingegeben werden; oder
- in Abhängigkeit eines einer jeweiligen Verteilerscheibe zugeordneten, sensorisch erfassten Codes generiert werden.

Bei einem entsprechenden Scheibenstreuer kann demnach vorzugsweise vorgesehen sein, dass

- die mit dem Regelgerät wirkverbundene Eingabeeinrichtung zur Eingabe der für eine jeweilige Verteilerscheibe repräsentativen Information und zur Übermittlung derselben an das Regelgerät ausgebildet ist; oder
- das Regelgerät mit wenigstens einem Verteilerscheiben-Erfassungssensor in Wirkverbindung steht, welcher zur Erkennung der für eine jeweilige Verteilerscheibe repräsentativen Information in Form eines Codes sowie zur Übermittlung dieser Information an das Regelgerät ausgebildet ist.

Bei dem Verteilerscheiben-Erfassungssensor kann es sich um einen beliebigen bekannten Sensor handeln, welcher zur Identifizierung eines Gegenstandes anhand eines Codes in der Lage ist, wie beispielsweise ein zum Auslesen des auf einem RFID-Transponder der Verteilerscheibe gespeicherten Codes geeigneter Sensors oder dergleichen.

In diesem Zusammenhang kann es sich ferner als zweckmäßig erweisen, wenn auf einer mit dem Regelgerät in Wirkverbindung stehenden Anzeigeeinrichtung

- eine die aktuell verwendete Verteilerscheibe identifizierende Information angezeigt wird, um dem Bediener die jeweils eingegebene oder auch sensorisch erfasste Verteilerscheibe sowie vorzugsweise auch die jeweils eingegebene Streu- bzw. Arbeitsbreite anzuzeigen, und/oder
- eine Warnmeldung generiert wird, sofern bei einer eingegebenen Streubreite von kleiner etwa 35 m und/oder einer eingegebenen Arbeitsbreite von kleiner etwa 18 m zugleich eine für eine Verteilerscheibe, welche für eine demgegenüber größere Streu- und/oder Arbeitsbreite vorgesehen ist, repräsentative Information empfangen wird.

Bei einem hierfür ausgebildeten Scheibenstreuer steht das Regelgerät folglich vorzugsweise mit einer Anzeigeeinrichtung in Wirkverbindung, wobei das Regelgerät insbesondere

- zur Anzeige zumindest einer die aktuell verwendete Verteilerscheibe identifizierenden Information auf der Anzeigeeinrichtung ausgebildet ist und/oder

- zur Generierung einer Warnmeldung auf der Anzeigeeinrichtung ausgebildet ist, sofern es bei einer eingegeben Streubreite von kleiner etwa 35 m und/oder einer eingegebenen Arbeitsbreite von kleiner etwa 18 m zugleich eine für eine Verteilerscheibe, welche für eine demgegenüber größere Streu- und/oder Arbeitsbreite vorgesehen ist, repräsentative Information empfängt.

Auf diese Weise wird dem Bediener mitgeteilt, falls die jeweilige Verteilerscheibe im Widerspruch zu der gewünschten Streu- bzw. Arbeitsbreite steht, was - wie eingangs erwähnt - insbesondere dann der Fall ist, wenn mit einer jeweiligen Verteilerscheibe beim Anschlussfahren unter der gewünschten Arbeitsbreite ein Variationskoeffizient von etwa 15% überschritten wird.

Gemäß einer vorteilhaften Weiterbildung des erfindungsgemäßen Verfahrens ist vorgesehen, dass ferner die Ist-Drehzahl der Verteilerscheibe oder wenigstens einer Welle im Antriebsstrang derselben sensorisch ermittelt und an das Regelgerät übermittelt wird, wobei die für die Öffnungsstellung des Dosierorgans repräsentative Stellgröße ferner in Abhängigkeit der Ist-Drehzahl der Verteilerscheibe oder der Welle im Antriebsstrang derselben generiert wird, um das Dosierorgan auf den Soll-Massenstrom nachzuregeln. Bei einem entsprechenden Scheibenstreuer sieht die Erfindung folglich vorzugsweise vor, dass das Regelgerät ferner mit wenigstens einem Drehzahlsensor der Verteilerscheibe oder wenigstens einer Welle im Antriebsstrang derselben in Wirkverbindung steht, wobei das Regelgerät ferner zur Generierung der für die Öffnungsstellung des Dosierorgans repräsentativen Stellgröße in Abhängigkeit der sensorisch erfassten Ist-Drehzahl ausgebildet ist, um das Dosierorgan auf den Soll-Massenstrom nachzuregeln. Eine solche Massenstromregelung erlaubt folglich einerseits einen in aller Regel mit Drehzahlschwankungen verbundenen Antrieb der Verteilerscheibe(n) mittels der Zapfwelle einer Zugmaschine, wie eines Traktors, andererseits eine gewünschte Modifizierung der Drehzahl der Verteilerscheibe(n), wobei der drehzahlbedingten Änderung des Drehmomentes der Verteilerscheibe der Massenstromregelung Rechnung getragen werden kann.

In diesem Zusammenhang kann beispielsweise vorgesehen sein, dass für eine jeweilige Verteilerscheibe für eine Mehrzahl an Drehzahlen eine Mehrzahl an funktionalen Zusammenhängen zwischen dem Drehmoment dieser Verteilerscheibe und dem auf diese Verteilerscheibe auftreffenden Massenstrom an Streugut während des Betriebs oder eine Mehrzahl an Umrechnungsfaktoren, insbesondere in Form von Kennlinien, Kennkurven oder Kennfeldern, abgespeichert sind, welche den Geometriefaktor dieser Verteilerscheibe berücksichtigen. Bei einem entsprechenden Scheibenstreuer kann folglich in vorteilhafter Ausgestaltung vorgesehen sein, dass für eine jeweilige Verteilerscheibe für eine Mehrzahl an Drehzahlen eine Mehrzahl an funktionalen Abhängigkeiten zwischen dem Drehmoment dieser Verteilerscheibe und dem auf diese Verteilerscheibe auftreffenden Massenstrom an Streugut oder eine Mehrzahl an Umrechnungsfaktoren, insbesondere in Form von Kennlinien, Kennkurven oder Kennfeldern, welche den Geometriefaktor dieser Verteilerscheibe berücksichtigen, auf der Speichereinrichtung des Regelgerätes abgespeichert sind.

Wie als solches aus dem Stand der Technik bekannt, ist es dem erfindungsgemäßen Verfahren selbstverständlich möglich, dass das für den Ist-Massenstrom repräsentative Drehmoment der wenigstens einen Welle in einem Antriebsstrang der Verteilerscheibe dadurch sensorisch ermittelt wird, indem

- die Torsion wenigstens einer Welle in einem Antriebsstrang der Verteilerscheibe; und/oder
- die Druckdifferenz eines zum Antrieb der Verteilerscheibe dienenden Hydromotors; und/oder
- die Stromaufnahme und/oder Spannungsabfall eines zum Antrieb der Verteilerscheibe dienenden Elektromotors sensorisch ermittelt wird.

In Bezug auf einen erfindungsgemäßen Scheibenstreuer kann demnach vorgesehen sein, dass der wenigstens eine Sensor zur Erfassung des für den Ist-Massenstrom repräsentativen Drehmomentes wenigstens einer Welle in einem Antriebsstrang der Verteilerscheibe einen

- Torsionssensor zur Erfassung der Torsion der Welle im Antriebsstrang der Verteilerscheibe; und/oder
- Drucksensor zur Erfassung des Druckabfalls eines zum Antrieb der Verteilerscheibe dienenden Hydromotors; und/oder
- Strom- und/oder Spannungssensor zur Erfassung des Strom- und/oder Spannungsabfalls eines zum Antrieb der Verteilerscheibe dienenden Elektromotors

umfasst.

Ferner hat es sich für die erfindungsgemäße Massenstromregelung des Dosierorgans als zweckmäßig erwiesen, dass das für den Ist-Massenstrom repräsentative Drehmoment einerseits, insbesondere in periodischen Zeitabständen, im Leerlauf bei geschlossenem Dosierorgan und folglich unbelasteter Verteilerscheibe, andererseits bei Belastung der Verteilerscheibe mit dem Ist-Massenstrom sensorisch ermittelt wird, wobei der im Leerlauf ermittelte Wert von dem unter Last ermittelten Gesamtwert subtrahiert wird, um den nur durch den Ist-Massenstrom des Streugutes bewirkten Differenzwert zu ermitteln, wobei dieser Differenzwert als die für den Ist-Massenstrom repräsentative Regelgröße verwendet wird, um hieraus die für die Öffnungsstellung des Dosierorgans repräsentative Stellgröße zu generieren und das Dosierorgan auf den Soll-Massenstrom nachzuregeln. Das Leerlaufdrehmoment, welches beispielsweise aufgrund temperaturbedingter Änderungen der Viskosität der für die Lagerung der Wellen im Antriebsstrang der Verteilerscheibe(n) verwendeten Schmiermittel nicht unerheblichen Schwankungen unterworfen sein kann, wird folglich durch die genannte Differenzwertbildung von Lastdrehmoment und Leerlaufdrehmoment eliminiert, um die Messgenauigkeit und folglich die Genauigkeit der Stellgröße des Dosierorgans, welche anhand der sensorisch erfassten Last- bzw. Leerlaufdrehmomente generiert wird, zu erhöhen. Ein entsprechend ausgestalteter Scheibenstreuer zeichnet sich folglich dadurch aus, dass das Regelgerät

- einerseits zum Empfang von Leerlauf-Sensorsignalen bei geschlossenem Dosierorgan und folglich unbelasteter Verteilerscheibe, insbesondere in periodischen Zeitabständen,
- andererseits zum Empfang von Last-Sensorsignalen bei Belastung der Verteilerscheibe mit dem Ist-Massenstrom ausgebildet ist, wobei das Regelgerät ferner zur Subtraktion des im Leerlauf ermittelten Wertes von dem unter Last ermittelten Gesamtwert des Drehmomentes ausgebildet ist, um den nur durch den Ist-Massenstrom des Streugutes bewirkten Differenzwert zu ermitteln, und wobei das Regelgerät diesen Differenzwert als die wenigstens eine sensorisch ermittelte, für den Ist-Massenstrom repräsentative Regelgröße verwendet, um hieraus die für die Öffnungsstellung des Dosierorgans repräsentative Stellgröße zu generieren und das Dosierorgan auf den Soll-Massenstrom nachzuregeln.

Im Übrigen kann es sich bei dem Scheibenstreuer selbstverständlich um einen Einscheibenstreuer oder um einen solchen mit mehreren, insbesondere zwei, Verteilerscheiben handeln, wobei im letztgenannten Fall insbesondere jeder Verteilerscheibe je ein mittels des Regelgerätes unabhängig voneinander regelbares Dosierorgan zugeordnet ist.

Nachstehend ist ein Ausführungsbeispiel eines erfindungsgemäß verwendeten Verteilerscheibensatzes mit einer Mehrzahl an für verschiedene Arbeitsbreiten (AB) vorgesehenen Verteilerscheiben (S1, S2, S3, S4, S5, S6) einschließlich ihrer Flugkreisdurchmesser ($D_F$), Abwurfwinkel ($\alpha$) und Geometriefaktoren (GF) bei einer Normdrehzahl von 900 U/min unter Bezugnahme auf die Zeichnungen exemplarisch wiedergegeben. Dabei zeigen:

Fig. 1    eine schematische Seitenansicht einer Ausführungsform einer für eine Arbeitsbreite zwischen 18 m und 28 m geeigneten Verteilerscheibe ("S2") gemäß dem Stand der Technik; und

Fig. 2    eine schematische Seitenansicht einer Ausführungsform einer für eine Arbeitsbreite zwischen 12 und 16 m geeigneten Verteilerscheibe ("S1").

Ausführungsbeispiel:

| Scheibe | S1 | S2 | S3 | S4 | S5 | S6 |
|---|---|---|---|---|---|---|
| AB [m] | 12-16 | 18-28 | 24-36 | 30-42 | 36-48 | 42-50 |
| $D_F$ [mm] | 675 | 630 | 797 | 837 | 996 | 996 |
| $\alpha$ | 3° | 12° | 12° | 12° | 12° | 12° |
| GF [Nm/(kg/min)] | 0,123 | 0,116 | 0,163 | 0,221 | 0,269 | 0,276 |

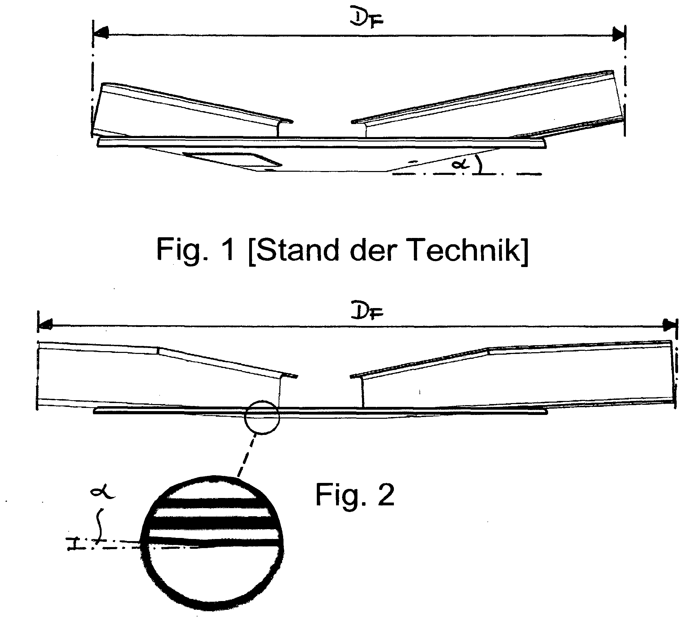

Der vorstehend tabellarisch wiedergegebene Verteilerscheibensatz umfasst beispielsweise fünf herkömmliche Verteilerscheiben S2, S3, S4, S5 und S6, welche sich aufgrund eines Variationskoeffizienten von kleiner 10% für die jeweils angegebenen - ansteigenden - Arbeitsbreiten zwischen 18 m und 50 m eignen. Wie aus der Fig. 1 ersichtlich, welche beispielhaft die mit "S2" bezeichnete Verteilerscheibe des Verteilerscheibensatzes zeigt, weisen die Verteilerscheiben im vorliegenden Fall jeweils einen Abwurfwinkel $\alpha$ von 12° und einen - ansteigenden - Flugkreisdurchmesser $D_F$ auf. Der - gleichfalls ansteigende - Geometriefaktor GF (jeweils angegeben für eine Normdrehzahl von 900 U/min) der Verteilerscheiben S2, S3, S4, S5, S6 beträgt stets mehr als 0,1 Nm/(kg/min) und reicht zur Erzeugung eines mittels eines gattungsgemäßen Scheibenstreuers sensorisch erfassten Drehmomentes aus, welches repräsentativ für den in Abhängigkeit hiervon geregelten Massenstrom an Streugut ist.

Um nun auch bei einer demgegenüber kleineren Arbeitsbreite von kleiner 18 m - hier: zwischen 12 m und 16 m - auch dann, wenn nur geringe Streugutmengen ausgebracht werden sollen, für ein hinreichend großes Drehmoment zu sorgen, um dieses sensorisch erfassen und den gewünschten Massenstrom an Streugut in Abhängigkeit dieses Drehmomentes regeln zu können, findet erfindungsgemäß bei einem gattungsgemäßen Scheibenstreuer für eine solch kleine Arbeitsbreite eine exemplarisch in der Fig. 2 wiedergegebene Verteilerscheibe "S1" Verwendung, welche eine andersartige Geometrie als die Verteilerscheiben S2, S3, S4, S5, S6 aufweist, um einen Geometriefaktor von größer 0,1 Nm/(kg/min) (wiederum angegeben für eine Normdrehzahl von 900 U/min) und folglich eine hinreichende Messgenauigkeit des sensorisch erfassten Drehmomentes auch im Falle von sehr kleinen Soll-Massenströmen an Streugut zu erzielen, welche über eine solch kleine Arbeitsbreite ausgebracht werden sollen. Im vorliegenden Fall geschieht dies dadurch, dass die Verteilerscheibe "S1" einen erheblich kleineren Abwurfwinkel $\alpha$ von nur 3° besitzt, wodurch es möglich wird, den Flugkreisdurchmesser $D_F$ und folglich den "Hebelarm" des Drehmomentes erheblich zu vergrößern. Dies resultiert beim vorliegenden Ausführungsbeispiel gar in einem gegenüber der (herkömmlichen) Verteilerscheibe "S2" gemäß Fig. 1 größeren Geometriefaktor von 0,123 Nm/(kg/min) der Verteilerscheibe "S1" (gegenüber 0,116 Nm/(kg/min) der Verteilerscheibe "S2"), so dass eine sehr hohe Messempfindlichkeit und somit eine sehr hohe Dosiergenauigkeit des Streugutes auch bei sehr kleinen Streugut-Massenströmen bei kleinen Arbeitsbreiten - hier: zwischen 12 und 16 m - sichergestellt ist. Die Verteilerscheibe "S1" weist dabei gleichfalls einen Variationskoeffizienten von kleiner 10% für das genannte Arbeitsbreitenintervall zwischen 12 und 16 m auf.

## Patentansprüche

1. Verfahren zur Regelung des Ist-Massenstromes ($\dot{m}_{ist}$) an Streugut wenigstens eines regelbaren Dosierorgans eines Scheibenstreuers mit wenigstens einer, dem Dosierorgan zugeordneten und mit zwei Wurfschaufeln versehenen Verteilerscheibe, wobei ein Soll-Massenstrom ($\dot{m}_{soll}$) an Streugut in Abhängigkeit wenigstens eines Parameters aus der Gruppe

    - Fahrgeschwindigkeit des Scheibenstreuers;
    - Soll-Streumenge pro Fläche; und
    - Arbeitsbreite

ermittelt und dieser Soll-Massenstrom ($\dot{m}_{soll}$) einem rechnergestützten Regelgerät als Führungsgröße eingegeben wird, wobei ferner als Regelgröße das für den Ist-Massenstrom ($\dot{m}_{ist}$) repräsentative Drehmoment wenigstens einer Welle in einem Antriebsstrang der Verteilerscheibe sensorisch ermittelt und an das Regelgerät übermittelt wird, woraufhin die Abweichung des Ist-Massenstromes ($\dot{m}_{ist}$) an Streugut von dem Soll-Massenstrom an Streugut ($\dot{m}_{soll}$) ermittelt und eine für die Öffnungsstellung des Dosierorgans repräsentative Stellgröße generiert wird, um das Dosierorgan auf den Soll-Massenstrom ($\dot{m}_{soll}$) nachzuregeln, wobei

    (a) in einer dem Regelgerät zugeordneten Speichereinrichtung wenigstens ein erster funktionaler Zusammenhang zwischen dem Drehmoment (M) einer ersten, mit zwei Wurfschaufeln versehenen Verteilerscheibe und dem auf die erste Verteilerscheibe auftreffenden Massenstrom ($\dot{m}$) an Streugut bei wenigstens einer vorgegebenen Drehzahl (n) dieser Verteilerscheibe während des Betriebs abgespeichert ist, wobei der erste funktionale Zusammenhang einen ersten Geometriefaktor der ersten Verteilerscheibe berücksichtigt; und
    (b) in der dem Regelgerät zugeordneten Speichereinrichtung

        - wenigstens ein zweiter funktionaler Zusammenhang zwischen dem Drehmoment (M) einer zweiten, mit zwei Wurfschaufeln versehenen Verteilerscheibe und dem auf die zweite Verteilerscheibe auftreffenden Massenstrom ($\dot{m}$) an Streugut bei wenigstens einer vorgegebenen Drehzahl (n) dieser Verteilerscheibe während des Betriebs abgespeichert ist, oder
        - wenigstens ein Umrechnungsfaktor abgespeichert ist, welcher eine Umrechnung des wenigstens einen ersten funktionalen Zusammenhangs zwischen dem Drehmoment (M) der ersten Verteilerscheibe und dem auf die erste Verteilerscheibe auftreffenden Massenstrom ($\dot{m}$) an Streugut in wenigstens einen zweiten funktionalen Zusammenhang zwischen dem Drehmoment (M) einer zweiten Verteilerscheibe und dem auf die zweite Verteilerscheibe auftreffenden Massenstrom ($\dot{m}$) an Streugut bei wenigstens einer vorgegebenen Drehzahl (n) dieser Verteilerscheibe während des Betriebs ermöglicht,

wobei der zweite funktionale Zusammenhang einen von dem ersten Geometriefaktor verschiedenen, zweiten Geometriefaktor der zweiten Verteilerscheibe berücksichtigt; wobei ferner
    (c) der jeweilige funktionale Zusammenhang, welcher den jeweiligen Geometriefaktor einer jeweiligen Verteilerscheibe berücksichtigt, oder der jeweilige Umrechnungsfaktor hierfür in Abhängigkeit einer für die jeweilige Verteilerscheibe repräsentativen Information, welche an das Regelgerät übermittelt wird, ausgewählt wird; und
    (d) die jeweilige Verteilerscheibe in Abhängigkeit wenigstens einer für diese Verteilerscheibe geeigneten Streubreite und/oder Arbeitsbreite ausgewählt wird,

**dadurch gekennzeichnet, dass** für wenigstens eine kleine Streubreite von kleiner 38 m, insbesondere von kleiner 35 m, und/oder für wenigstens eine kleine Arbeitsbreite von kleiner 18 m, insbesondere von zwischen 12 m und 16 m, eine mit zwei Wurfschaufeln versehene Verteilerscheibe ausgewählt wird, welche einen durch den Quotienten ihres Drehmomentes (M) geteilt durch den auf diese Verteilerscheibe auftreffenden Massenstrom ($\dot{m}$) an Streugut während des Betriebs definierten Geometriefaktor von wenigstens 0,1 (Nm)/(kg/min) bei einer Drehzahl von 900 U/min aufweist, wobei als Verteilerscheibe mit dem Geometriefaktor von wenigstens 0,1 (Nm)/(kg/min) bei einer Drehzahl von 900 U/min eine Verteilerscheibe verwendet wird, welche einen Abwurfwinkel von maximal 5° und einen durch den Abstand zwischen den äußeren Enden der Wurfschaufeln implementierten Flugkreisdurchmesser von mindestens 60 cm aufweist.

2. Verfahren nach Anspruch 1, **dadurch gekennzeichnet, dass** als Verteilerscheibe mit dem Geometriefaktor von wenigstens 0,1 (Nm)/(kg/min) bei einer Drehzahl von 900 U/min eine Verteilerscheibe verwendet wird, welche einen Abwurfwinkel von maximal 3° und einen Flugkreisdurchmesser von mindestens 65 cm aufweist.

3. Verfahren nach Anspruch 1 oder 2, **dadurch gekennzeichnet, dass** die für die jeweilige Verteilerscheibe repräsentative Information, welche an das Regelgerät übermittelt wird,

   - in eine dem Regelgerät zugeordnete Eingabeeinrichtung eingegeben wird; oder
   - in Abhängigkeit eines einer jeweiligen Verteilerscheibe zugeordneten, sensorisch erfassten Codes generiert wird,

   wobei insbesondere auf einer mit dem Regelgerät in Wirkverbindung stehenden Anzeigeeinrichtung

   - eine die aktuell verwendete Verteilerscheibe identifizierende Information angezeigt wird und/oder
   - eine Warnmeldung generiert wird, sofern bei einer eingegebenen Streubreite von kleiner 35 m und/oder einer eingegebenen Arbeitsbreite von kleiner 18 m zugleich eine für eine Verteilerscheibe, welche für eine demgegenüber größere Streu- und/oder Arbeitsbreite vorgesehen ist, repräsentative Information empfangen wird.

4. Verfahren nach einem der Ansprüche 1 bis 3, **dadurch gekennzeichnet, dass** ferner die Ist-Drehzahl der Verteilerscheibe oder wenigstens einer Welle im Antriebsstrang derselben sensorisch ermittelt und an das Regelgerät übermittelt wird, wobei die für die Öffnungsstellung des Dosierorgans repräsentative Stellgröße ferner in Abhängigkeit der Ist-Drehzahl ($\dot{m}_{ist}$) der Verteilerscheibe oder der Welle im Antriebsstrang derselben generiert wird, um das Dosierorgan auf den Soll-Massenstrom ($\dot{m}_{soll}$) nachzuregeln.

5. Verfahren nach Anspruch 4, **dadurch gekennzeichnet, dass** für eine jeweilige Verteilerscheibe für eine Mehrzahl an Drehzahlen eine Mehrzahl an funktionalen Zusammenhängen zwischen dem Drehmoment (M) dieser Verteilerscheibe und dem auf diese Verteilerscheibe auftreffenden Massenstrom ($\dot{m}$) an Streugut während des Betriebs oder eine Mehrzahl an Umrechnungsfaktoren, insbesondere in Form von Kennlinien, Kennkurven oder Kennfeldern, abgespeichert sind, welche den Geometriefaktor dieser Verteilerscheibe berücksichtigen.

6. Verfahren nach einem der Ansprüche 1 bis 5, **dadurch gekennzeichnet, dass** das für den Ist-Massenstrom ($\dot{m}_{ist}$) repräsentative Drehmoment der wenigstens einen Welle in einem Antriebsstrang der Verteilerscheibe dadurch sensorisch ermittelt wird, indem

   - die Torsion wenigstens einer Welle in einem Antriebsstrang der Verteilerscheibe; und/oder
   - die Druckdifferenz eines zum Antrieb der Verteilerscheibe dienenden Hydromotors; und/oder
   - die Stromaufnahme und/oder Spannungsabfall eines zum Antrieb der Verteilerscheibe dienenden Elektromotors sensorisch ermittelt wird.

7. Verfahren nach einem der Ansprüche 1 bis 6, **dadurch gekennzeichnet, dass** das für den Ist-Massenstrom ($\dot{m}_{ist}$) repräsentative Drehmoment einerseits, insbesondere in periodischen Zeitabständen, im Leerlauf bei geschlossenem Dosierorgan und folglich unbelasteter Verteilerscheibe, andererseits bei Belastung der Verteilerscheibe mit dem Ist-Massenstrom ($\dot{m}_{ist}$) sensorisch ermittelt wird, wobei der im Leerlauf ermittelte Wert von dem unter Last ermittelten Gesamtwert subtrahiert wird, um den nur durch den Ist-Massenstrom ($\dot{m}_{ist}$) des Streugutes bewirkten Differenzwert zu ermitteln, wobei dieser Differenzwert als die für den Ist-Massenstrom ($\dot{m}_{ist}$) repräsentative Regelgröße verwendet wird, um hieraus die für die Öffnungsstellung des Dosierorgans repräsentative Stellgröße zu generieren und das Dosierorgan auf den Soll-Massenstrom ($\dot{m}_{ist}$) nachzuregeln.

8. Scheibenstreuer mit wenigstens einer Verteilerscheibe, welche mit zwei Wurfschaufeln versehen und austauschbar an einer Welle des Scheibenstreuers montiert ist, und mit wenigstens einem der Verteilerscheibe zugeordneten, von einem rechnergesteuerten Regelgerät regelbaren Dosierorgan, insbesondere zur Durchführung eines Verfahrens nach einem der Ansprüche 1 bis 7, wobei das Regelgerät einerseits mit wenigstens einem Sensor zur Erfassung des für den Ist-Massenstrom ($\dot{m}_{ist}$) repräsentativen Drehmomentes wenigstens einer Welle in einem Antriebsstrang der Verteilerscheibe als Regelgröße, andererseits mit einer Eingabeeinrichtung in Wirkverbindung steht und das Regelgerät zur Ermittlung der Abweichung des Ist-Massenstromes ($\dot{m}_{ist}$) an Streugut von einem als Führungsgröße dienenden Soll-Massenstrom ($\dot{m}_{soll}$) ausgebildet ist, welcher in die Eingabeeinrichtung des Regelgerätes eingebbar ist und/oder welchen das Regelgerät in Abhängigkeit wenigstens eines in dessen Eingabeeinrichtung eingebbaren Parameters aus der Gruppe

- Fahrgeschwindigkeit des Scheibenstreuers;
- Soll-Streumenge pro Fläche; und
- Arbeitsbreite

ermittelt, und wobei das Regelgerät ferner zur Generierung einer für die Öffnungsstellung des Dosierorgans repräsentativen Stellgröße ausgebildet ist, um das Dosierorgan auf den Soll-Massenstrom ($\dot{m}_{soll}$) nachzuregeln, wobei

(a) in einer dem Regelgerät zugeordneten Speichereinrichtung wenigstens ein erster funktionaler Zusammenhang zwischen dem Drehmoment (M) einer ersten, mit zwei Wurfschaufeln versehenen Verteilerscheibe und dem auf die erste Verteilerscheibe auftreffenden Massenstrom ($\dot{m}$) an Streugut bei wenigstens einer vorgegebenen Drehzahl (n) dieser Verteilerscheibe während des Betriebs abgespeichert ist, wobei der erste funktionale Zusammenhang einen ersten Geometriefaktor der ersten Verteilerscheibe berücksichtigt; und
(b) in der dem Regelgerät zugeordneten Speichereinrichtung

- wenigstens ein zweiter funktionaler Zusammenhang zwischen dem Drehmoment (M) einer zweiten, mit zwei Wurfschaufeln versehenen Verteilerscheibe und dem auf die zweite Verteilerscheibe auftreffenden Massenstrom ($\dot{m}$) an Streugut bei wenigstens einer vorgegebenen Drehzahl (n) dieser Verteilerscheibe während des Betriebs abgespeichert ist, oder
- wenigstens ein Umrechnungsfaktor abgespeichert ist, welcher eine Umrechnung des wenigstens einen ersten funktionalen Zusammenhangs zwischen dem Drehmoment (M) der ersten Verteilerscheibe und dem auf die erste Verteilerscheibe auftreffenden Massenstrom ($\dot{m}$) an Streugut in wenigstens einen zweiten funktionalen Zusammenhang zwischen dem Drehmoment (M) einer zweiten Verteilerscheibe und dem auf die zweite Verteilerscheibe auftreffenden Massenstrom ($\dot{m}$) an Streugut bei wenigstens einer vorgegebenen Drehzahl (n) dieser Verteilerscheibe während des Betriebs ermöglicht,

wobei der zweite funktionale Zusammenhang einen von dem ersten Geometriefaktor verschiedenen, zweiten Geometriefaktor der zweiten Verteilerscheibe berücksichtigt; wobei ferner
(c) das Regelgerät zum Empfang einer für die jeweilige Verteilerscheibe repräsentativen Information ausgebildet ist, um den jeweiligen funktionalen Zusammenhang, welche den jeweiligen Geometriefaktor einer jeweiligen Verteilerscheibe berücksichtigt, oder den jeweiligen Umrechnungsfaktor hierfür in Abhängigkeit der für die jeweilige Verteilerscheibe repräsentativen Information auszuwählen; und
(d) der für eine jeweilige Verteilerscheibe in der Speichereinrichtung des Regelgerätes hinterlegte funktionale Zusammenhang, welcher den jeweiligen Geometriefaktor einer jeweiligen Verteilerscheibe berücksichtigt, oder der jeweilige Umrechnungsfaktor hierfür wenigstens eine für die jeweilige Verteilerscheibe geeignete Streubreite und/oder Arbeitsbreite berücksichtigt,

**dadurch gekennzeichnet, dass** in der dem Regelgerät zugeordneten Speichereinrichtung für wenigstens eine kleine Streubreite von kleiner 38 m, insbesondere von kleiner 35 m, und/oder für wenigstens eine kleine Arbeitsbreite von kleiner 18 m, insbesondere von zwischen 12 m und 16 m,

- wenigstens ein funktionaler Zusammenhang zwischen dem Drehmoment (M) einer für eine solche Streu- und/oder Arbeitsbreite geeigneten, mit zwei Wurfschaufeln versehenen Verteilerscheibe und dem auf diese Verteilerscheibe auftreffenden Massenstrom ($\dot{m}$), oder
- wenigstens ein Umrechnungsfaktor, welcher den wenigstens einen ersten abgespeicherten funktionalen Zusammenhang der ersten Verteilerscheibe in wenigstens einen funktionalen Zusammenhang zwischen dem Drehmoment (M) einer für eine solche Streu- und/oder Arbeitsbreite geeigneten Verteilerscheibe und dem auf diese Verteilerscheibe auftreffenden Massenstrom (ṁ) umrechnet,

abgespeichert ist, wobei der funktionale Zusammenhang der für eine solche Streu- und/oder Arbeitsbreite geeigneten, mit zwei Wurfschaufeln versehenen Verteilerscheibe einen durch den Quotienten des Drehmomentes (M) dieser Verteilerscheibe geteilt durch den auf diese Verteilerscheibe auftreffenden Massenstrom (ṁ) an Streugut während des Betriebs definierten Geometriefaktor von wenigstens 0,1 (Nm)/(kg/min) bei einer Drehzahl von 900 U/min berücksichtigt, wobei die Verteilerscheibe mit dem Geometriefaktor von wenigstens 0,1 (Nm)/(kg/min) bei einer Drehzahl von 900 U/min einen Abwurfwinkel von maximal 5° und einen durch den Abstand zwischen den äußeren Enden der Wurfschaufeln implementierten Flugkreisdurchmesser von mindestens 60 cm aufweist.

9. Scheibenstreuer nach Anspruch 8, **dadurch gekennzeichnet, dass** die Verteilerscheibe mit dem Geometriefaktor von wenigstens 0,1 (Nm)/(kg/min) bei einer Drehzahl von 900 U/min einen Abwurfwinkel von maximal 3° und einen Flugkreisdurchmesser von mindestens 65 cm aufweist.

10. Scheibenstreuer nach Anspruch 8 oder 9, **dadurch gekennzeichnet, dass**

- die mit dem Regelgerät wirkverbundene Eingabeeinrichtung zur Eingabe der für eine jeweilige Verteilerscheibe repräsentativen Information und zur Übermittlung derselben an das Regelgerät ausgebildet ist; oder
- das Regelgerät mit wenigstens einem Verteilerscheiben-Erfassungssensor in Wirkverbindung steht, welcher zur Erkennung der für eine jeweilige Verteilerscheibe repräsentativen Information in Form eines Codes sowie zur Übermittlung dieser Information an das Regelgerät ausgebildet ist.

11. Scheibenstreuer nach einem der Ansprüche 8 bis 10, **dadurch gekennzeichnet, dass** das Regelgerät mit einer Anzeigeeinrichtung in Wirkverbindung steht, wobei das Regelgerät insbesondere

- zur Anzeige einer die aktuell verwendete Verteilerscheibe identifizierenden Information auf der Anzeigeeinrichtung ausgebildet ist und/oder
- zur Generierung einer Warnmeldung auf der Anzeigeeinrichtung ausgebildet ist, sofern es bei einer eingegeben Streubreite von kleiner 35 m und/oder einer eingegebenen Arbeitsbreite von kleiner 18 m zugleich eine für eine Verteilerscheibe, welche für eine demgegenüber größere Streu- und/oder Arbeitsbreite vorgesehen ist, repräsentative Information empfängt.

12. Scheibenstreuer nach einem der Ansprüche 8 bis 11, **dadurch gekennzeichnet, dass** das Regelgerät ferner mit wenigstens einem Drehzahlsensor der Verteilerscheibe oder wenigstens einer Welle im Antriebsstrang derselben in Wirkverbindung steht, wobei das Regelgerät ferner zur Generierung der für die Öffnungsstellung des Dosierorgans repräsentativen Stellgröße in Abhängigkeit der sensorisch erfassten Ist-Drehzahl ausgebildet ist, um das Dosierorgan auf den Soll-Massenstrom ($\dot{m}_{soll}$) nachzuregeln.

13. Scheibenstreuer nach Anspruch 12, **dadurch gekennzeichnet, dass** für eine jeweilige Verteilerscheibe für eine Mehrzahl an Drehzahlen eine Mehrzahl an funktionalen Abhängigkeiten zwischen dem Drehmoment (M) dieser Verteilerscheibe und dem auf diese Verteilerscheibe auftreffenden Massenstrom (ṁ) an Streugut oder eine Mehrzahl an Umrechnungsfaktoren, insbesondere in Form von Kennlinien, Kennkurven oder Kennfeldern, welche den Geometriefaktor dieser Verteilerscheibe berücksichtigen, auf der Speichereinrichtung des Regelgerätes abgespeichert sind.

14. Scheibenstreuer nach einem der Ansprüche 8 bis 13, **dadurch gekennzeichnet, dass** der wenigstens eine Sensor zur Erfassung des für den Ist-Massenstrom ($\dot{m}_{ist}$) repräsentativen Drehmomentes wenigstens einer Welle in einem Antriebsstrang der Verteilerscheibe einen

- Torsionssensor zur Erfassung der Torsion der Welle im Antriebsstrang der Verteilerscheibe; und/oder
- Drucksensor zur Erfassung des Druckabfalls eines zum Antrieb der Verteilerscheibe dienenden Hydromotors; und/oder
- Strom- und/oder Spannungssensor zur Erfassung des Strom- und/oder Spannungsabfalls eines zum Antrieb der Verteilerscheibe dienenden Elektromotors umfasst.

15. Scheibenstreuer nach einem der Ansprüche 8 bis 14, **dadurch gekennzeichnet, dass** das Regelgerät

- einerseits zum Empfang von Leerlauf-Sensorsignalen bei geschlossenem Dosierorgan und folglich unbelasteter Verteilerscheibe, insbesondere in periodischen Zeitabständen,
- andererseits zum Empfang von Last-Sensorsignalen bei Belastung der Verteilerscheibe mit dem Ist-Massenstrom ($\dot{m}_{ist}$)

ausgebildet ist, wobei das Regelgerät ferner zur Subtraktion des im Leerlauf ermittelten Wertes von dem unter Last ermittelten Gesamtwert des Drehmomentes ausgebildet ist, um den nur durch den Ist-Massenstrom ($\dot{m}_{ist}$) des Streugutes bewirkten Differenzwert zu ermitteln, und wobei das Regelgerät diesen Differenzwert als die wenigstens eine sensorisch ermittelte, für den Ist-Massenstrom ($\dot{m}_{ist}$) repräsentative Regelgröße verwendet, um hieraus die für die Öffnungsstellung des Dosierorgans repräsentative Stellgröße zu generieren und das Dosierorgan auf den Soll-Massenstrom ($\dot{m}_{ist}$) nachzuregeln.

16. Verwendung eines Verteilerscheibensatzes, umfassend

- wenigstens eine erste, mit zwei Wurfschaufeln versehene Verteilerscheibe, welche einen ersten Geometriefaktor ($M/\dot{m}_1$) aufweist, welcher durch den Quotienten ihres Drehmomentes (M) geteilt durch den auf diese Verteilerscheibe auftreffenden Massenstrom (m) an Streugut bei einer vorgegebenen Drehzahl (n) während des Betriebs definiert ist; und
- wenigstens eine zweite, mit zwei Wurfschaufeln versehene Verteilerscheibe, welche einen von dem ersten Geometriefaktor ($M/\dot{m}_1$) der ersten Verteilerscheibe verschiedenen, zweiten Geometriefaktor ($M/\dot{m}_2$) aufweist, welcher gleichfalls durch den Quotienten ihres Drehmomentes (M) geteilt durch den auf diese Verteilerscheibe auftreffenden Massenstrom ($\dot{m}$) an Streugut bei einer vorgegebenen Drehzahl während des Betriebs definiert ist,

für einen Scheibenstreuer nach einem der Ansprüche 8 bis 15, insbesondere zur Durchführung eines Verfahrens nach einem der Ansprüche 1 bis 7, **dadurch gekennzeichnet, dass** wenigstens eine, mit zwei Wurfschaufeln versehene Verteilerscheibe des Verteilerscheibensatzes, welche einen durch den Quotienten ihres Drehmomentes (M) geteilt durch den auf diese Verteilerscheibe auftreffenden Massenstrom ($\dot{m}$) an Streugut definierten Geometriefaktor von mindestens 0,1 (Nm)/(kg/min) bei einer Drehzahl von 900 U/min aufweist, für eine Streubreite von kleiner 38 m, insbesondere on kleiner 35 m, und/oder für eine Arbeitsbreite von kleiner 18 m, insbesondere von zwischen 12 m und 16 m, verwendet wird, wobei die wenigstens eine Verteilerscheibe, welche einen durch den Quotienten ihres Drehmomentes (M) geteilt durch den auf diese Verteilerscheibe auftreffenden Massenstrom ($\dot{m}$) an Streugut definierten Geometriefaktor von mindestens 0,1 (Nm)/(kg/min) bei einer Drehzahl von 900 U/min aufweist, einen Abwurfwinkel von maximal 5° und einen durch den Abstand zwischen den äußeren Enden der Wurfschaufeln implementierten Flugkreisdurchmesser von mindestens 60 cm aufweist.

17. Verwendung nach Anspruch 16, **dadurch gekennzeichnet, dass** die wenigstens eine Verteilerscheibe, welche einen durch den Quotienten ihres Drehmomentes (M) geteilt durch den auf diese Verteilerscheibe auftreffenden Massenstrom ($\dot{m}$) an Streugut definierten Geometriefaktor von mindestens 0,1 (Nm)/(kg/min) bei einer Drehzahl von 900 U/min aufweist, einen Abwurfwinkel von maximal 3° und einen Flugkreisdurchmesser von mindestens 65 cm aufweist.

## Claims

1. Method for controlling the actual mass flow ($\dot{m}_{ist}$) of spreading material of at least one controllable metering element of a disc spreader having at least one distributor disc assigned to the metering element and having two thrower blades, wherein a target mass flow ($\dot{m}_{soll}$) of spreading material is determined as a function of at least one parameter from the group

- speed of travel of the disc spreader;
- target scattering quantity per unit area; and
- working width

and this target mass flow ($\dot{m}_{soll}$) is input to a computer assisted control device as reference variable, wherein, in addition, the torque of at least one shaft in a drive train of the distributor disc, representative of a control variable of the actual mass flow ($\dot{m}_{ist}$), is determined by sensors and transmitted to the control device as control variable, whereupon the deviation of the actual mass flow ($\dot{m}_{ist}$) of spreading material from the target mass flow of spreading material ($\dot{m}_{soll}$) is determined and an actuating variable representative of the opening position of the metering element is generated, in order to readjust the metering element to the target mass flow ($\dot{m}_{soll}$). wherein

(a) in a storage unit assigned to the control device, at least one first functional relationship between the torque (M) of a first distributor disc provided with two thrower blades and the mass flow (m) of spreading material striking the first distributor disc at at least one predefined rotational speed (n) of this distributor disc during operation is stored, wherein the first functional relationship takes into account a first geometry factor of the first distributor disc; and
(b) in the storage unit assigned to the control device

- at least one second functional relationship between the torque (M) of a second distributor disc provided with two thrower blades and the mass flow (m) of spreading material striking the second distributor disc at at least one predefined rotational speed (n) of this distributor disc during operation is stored, or
- at least one conversion factor is stored, which permits a conversion of the at least one first functional relationship between the torque (M) of the first distributor disc and the mass flow ($\dot{m}$) of spreading material striking the first distributor disc into at least one second functional relationship between the torque (M) of a second distributor disc and the mass flow (m) of spreading material striking the second distributor disc at at least one predefined rotational speed (n) of this distributor disc during operation,

wherein the second functional relationship takes into account a second geometry factor of the second distributor disc, which differs from the first geometry factor; wherein, in addition,
(c) the respective functional relationship which takes into account the respective geometry factor of a respective distributor disc or the respective conversion factor for this purpose is selected as a function of an item of information that is representative of the respective distributor disc, which is transmitted to the control device; and
(d) the respective distributor disc is selected depending on at least one spreading width and/or working width that is suitable for this distributor disc,

**characterized in that** for at least one small spreading width of less than 38 m, in particular of less than 35 m, and/or for at least one small working width of less than 18 m, in particular of between 12 m and 16 m, a distributor disc provided with two thrower blades is selected which has a geometry factor of at least 0.1 (Nm)/(kg/min), defined by the quotient of its torque (M) divided by the mass flow (m) of spreading material striking this distributor disc during operation at a rotational speed of 900 rev/min, wherein, as a distributor disc having the geometry factor of at least 0.1 (Nm)/(kg/min) at a rotational speed of 900 rev/min, use is made of a distributor disc which has a discharge angle of at most 5° and a flight circle diameter of at least 60 cm, implemented by the distance between the outer ends of the thrower blades.

2. Method according to Claim 1, **characterized in that** as a distributor disc having the geometry factor of at least 0.1 (Nm)/(kg/min) at a rotational speed of 900 rev/min, use is made of a distributor disc which has a discharge angle of at most 3° and a flight circle diameter of at least 65 cm.

3. Method according to Claim 1 or 2, **characterized in that** the item of information representative of the respective distributor disc, which is transmitted to the control device,

- is input into an input unit assigned to the control device; or
- is generated as a function of a code assigned to a respective distributor disc and detected by sensors,

wherein, in particular on a display unit operatively connected to the control device,

- an item of information identifying the currently used distributor disc is indicated and/or
- a warning message is generated if, in the event of an input spreading width of less than 35 m and/or an input working width of less than 18 m, an item of information that is representative of a distributor disc which is provided for a comparatively larger spreading and/or working width is received at the same time.

4. Method according to one of Claims 1 to 3, **characterized in that**, in addition, the current rotational speed of the distributor disc or at least one shaft in the drive train of the same is determined by sensors and is transmitted to the control device, wherein the actuating variable representative of the opening position of the metering element is also generated as a function of the current rotational speed ($\dot{m}_{ist}$) of the distributor disc or the shaft in the drive train of the same, in order to readjust the metering element to the target mass flow ($\dot{m}_{solll}$).

5. Method according to Claim 4, **characterized in that** for a respective distributor disc for a plurality of rotational speeds, a plurality of functional relationships between the torque (M) of this distributor disc and the mass flow (m) of spreading material striking this distributor disc during operation, or a plurality of conversion factors, in particular in the form of characteristics, characteristic curves or characteristic maps which take into account the geometry factor of this distributor disc, are stored.

6. Method according to one of Claims 1 to 5, **characterized in that** the torque of the at least one shaft in a drive train of the distributor disc that is representative of the current mass flow ($\dot{m}_{ist}$) is determined by sensors, **in that**

- the torsion of at least one shaft in a drive train of the distributor disc; and/or
- the pressure difference of a hydraulic motor used to drive the distributor disc; and/or
- the power consumption and/or voltage drop of an electric motor used to drive the distributor disc is determined by sensors.

7. Method according to one of Claims 1 to 6, **characterized in that** the torque representative of the current mass flow ($\dot{m}_{ist}$) is determined by sensors, firstly in particular at periodic time intervals, during idling with the metering element closed and consequently the distributor disc unloaded, secondly when the distributor disc is loaded with the current mass flow ($\dot{m}_{ist}$), wherein the value determined whilst idling is subtracted from the total value determined under load in order to determine the differential value effected only by the current mass flow ($\dot{m}_{ist}$) of the spreading material, wherein this differential value is used as the control variable representative of the current mass flow ($\dot{m}_{ist}$), in order to generate therefrom the actuating variable representative of the opening position of the metering element and to readjust the metering element to the target mass flow ($\dot{m}_{ist}$).

8. Disc spreader having at least one distributor disc, which is provided with two thrower blades and is replaceably mounted on a shaft of the disc spreader, and having at least one metering element that is assigned to the distributor disc and controllable by a computer-controlled control device, in particular for carrying out a method according to one of Claims 1 to 7, wherein the control device is operatively connected firstly to at least one sensor for detecting the torque of at least one shaft in a drive train of the distributor disc, which is representative of the actual mass flow ($\dot{m}_{ist}$), as control variable, secondly to an input unit, and the control device is configured to determine the deviation of the actual mass flow ($\dot{m}_{ist}$) of spreading material from a target mass flow ($\dot{m}_{soll}$) used as reference variable, which can be input into the input unit of the control device and/or which the control device determines as a function of at least one parameter, that can be input into the input unit thereof, from the group

- speed of travel of the disc spreader;
- target spreading quantity per unit area; and
- working width,

and wherein the control device is additionally configured to generate an actuating variable representative of the opening position of the metering element, in order to readjust the metering element to the target mass flow ($\dot{m}_{soll}$), wherein

(a) in a storage unit assigned to the control device, at least one first functional relationship between the torque (M) of a first distributor disc provided with two thrower blades and the mass flow ($\dot{m}$) of spreading material striking the first distributor disc at at least one predefined rotational speed (n) of this distributor disc during operation is stored, wherein the first functional relationship takes into account a first geometry factor of the first distributor disc; and
(b) in the storage unit assigned to the control device

- at least one second functional relationship between the torque (M) of a second distributor disc provided with two thrower blades and the mass flow ($\dot{m}$) of spreading material striking the second distributor disc at at least one predefined rotational speed (n) of this distributor disc during operation is stored, or
- at least one conversion factor is stored, which permits a conversion of the at least one first functional relationship between the torque (M) of the first distributor disc and the mass flow ($\dot{m}$) of spreading material striking the first distributor disc into at least one second functional relationship between the torque (M) of a second distributor disc and the mass flow ($\dot{m}$) of spreading material striking the second distributor disc at at least one predefined rotational speed (n) of this distributor disc during operation,

wherein the second functional relationship takes into account a second geometry factor of the second distributor disc, which differs from the first geometry factor; wherein, in addition,

(c) the control device is configured to receive an item of information representative of the respective distributor disc in order to select the respective functional relationship which takes into account the respective geometry factor of a respective distributor disc, or to select the respective conversion factor for this purpose as a function of the item of information representative of the respective distributor disc; and

(d) the functional relationship for a respective distributor disc which is stored in the storage unit of the control device and which takes into account the respective geometry factor of a respective distributor disc, or the respective conversion factor for this purpose, takes into account at least one spreading width and/or working width that is suitable for the respective distributor disc,

**characterized in that**, in the storage unit assigned to the control device, for at least one small spreading width of less than 38 m, in particular of less than 35 m, and/or for at least one small working width of less than 18 m, in particular of between 12 m and 16 m,

- at least one functional relationship between the torque (M) of a distributor disc suitable for such a spreading and/or working width and provided with two thrower blades and the mass flow (ṁ) striking this distributor disc, or
- at least one conversion factor which converts the at least one first stored functional relationship of the first distributor disc into at least one functional relationship between the torque (M) of a distributor disc suitable for such a spreading and/or working width and the mass flow (ṁ) striking this distributor disc,

is stored, wherein the functional relationship of the distributor disc that is suitable for such a spreading and/or working width and is provided with two thrower blades takes into account a geometry factor of at least 0.1 (Nm)/(kg/min) at a rotational speed of 900 rev/min, defined by the quotient of the torque (M) of this distributor disc divided by the mass flow (ṁ) of spreading material striking this distributor disc during operation, wherein the distributor disc having the geometry factor of at least 0.1 (Nm)/(kg/min) at a rotational speed of 900 rev/min has a discharge angle of at most 5° and a flight circle diameter of at least 60 cm, implemented by the distance between the outer ends of the thrower blades.

9. Disc spreader according to Claim 8, **characterized in that** the distributor disc having the geometry factor of at least 0.1 (Nm)/(kg/min) at a rotational speed of 900 rev/min has a discharge angle of at most 3° and a flight circle diameter of at least 65 cm.

10. Disc spreader according to Claim 8 or 9, **characterized in that**

- the input unit operatively connected to the control device is configured for the input of the item of information representative of a respective distributor disc and for the transmission of the same to the control device; or
- the control device is operatively connected to at least one distributor disc detection sensor, which is configured to detect the item of information representative of a respective distributor disc in the form of a code and to transmit this item of information to the control device.

11. Disc spreader according to one of Claims 8 to 10, **characterized in that** the control device is operatively connected to a display unit, wherein the control device in particular

- is configured to display an item of information identifying the currently used distributor disc on the display unit, and/or
- is configured to generate a warning message on the display unit if, in the event of an input spreading width of less than 35 m and/or an input working width of less than 18 m, it receives at the same time an item of information that is representative of a distributor disc which is provided for a comparatively larger spreading and/or working width.

12. Disc spreader according to one of Claims 8 to 11, **characterized in that** the control device is also operatively connected to at least one rotational speed sensor of the distributor disc or at least one shaft in the drive train of the same, wherein the control device is also configured to generate the actuating variable that is representative of the opening position of the metering element as a function of the current rotational speed detected by sensors, in order to readjust the metering element to the target mass flow (ṁ$_{soll}$).

13. Disc spreader according to Claim 12, **characterized in that**, for a respective distributor disc for a plurality of rotational speeds, a plurality of functional dependencies between the torque (M) of this distributor disc and the mass flow (ṁ)

of spreading material striking this distributor disc or a plurality of conversion factors, in particular in the form of characteristics, characteristic curves or characteristic maps which take into account the geometry factor of this distributor disc, are stored on the storage unit of the control device.

14. Disc spreader according to one of Claims 8 to 13, **characterized in that** the at least one sensor for detecting the torque of at least one shaft in a drive train of the distributor disc that is representative of the actual mass flow $(\dot{m}_{ist})$ comprises

- a torsion sensor for detecting the torsion of the shaft in the drive train of the distributor disc; and/or
- a pressure sensor for detecting the pressure drop of a hydraulic motor used to drive the distributor disc; and/or
- a power and/or voltage sensor for detecting the power and/or voltage drop of an electric motor used to drive the distributor disc.

15. Disc spreader according to one of Claims 8 to 14, **characterized in that** the control device is configured

- firstly to receive idling sensor signals when the metering element is closed and, consequently, the distributor disc is unloaded, in particular at periodic time intervals,
- secondly to receive load sensor signals when the distributor disc is loaded with the actual mass flow $(\dot{m}_{ist})$,

wherein the control device is also configured to subtract the value determined when idling from the total value of the torque determined under load, in order to determine the differential value effected only by the actual mass flow $(\dot{m}_{ist})$ of the spreading material, and wherein the control device uses this differential value as the at least one control variable determined by sensors and representative of the actual mass flow $(\dot{m}_{ist})$, in order to generate therefrom the actuating variable representative of the opening position of the metering element and to readjust the metering element to the target mass flow $(\dot{m}_{ist})$.

16. Use of a distributor disc set, comprising

- at least one first distributor disc provided with two thrower blades, which has a first geometry factor $(M/\dot{m}_1)$ which is defined by the quotient of its torque (M) divided by the mass flow (m) of spreading material striking this distributor disc at a predefined rotational speed (n) during operation; and
- at least one second distributor disc provided with two thrower blades, which has a second geometry factor $(M/\dot{m}_2)$ which differs from the first geometry factor $(M/\dot{m}_1)$ of the first distributor disc and which is likewise defined by the quotient of its torque (M) divided by the mass flow (m) of spreading material striking this distributor disc at a predefined rotational speed during operation,

for a disc spreader according to one of Claims 8 to 15, in particular for carrying out a method according to one of Claims 1 to 7, **characterized in that** at least one distributor disc of the distributor disc set which is provided with two thrower blades and which has a geometry factor of at least 0.1 (Nm)/(kg/min), defined by the quotient of its torque (M) divided by the mass flow (m) of spreading material striking this distributor disc at a rotational speed of 900 rev/min, is used for a spreading width of less than 38 m, in particular of less than 35 m, and/or for a working width of less than 18 m, in particular of between 12 m and 16 m, wherein the at least one distributor disc, which has a geometry factor of at least 0.1 (Nm)/(kg/min), defined by the quotient of its torque (M) divided by the mass flow (m) of spreading material striking this distributor disc at a rotational speed of 900 rev/min, has a discharge angle of at most 5° and a flight circle diameter of at least 60 cm, implemented by the distance between the outer ends of the thrower blades.

17. Use according to Claim 16, **characterized in that** the at least one distributor disc, which has a geometry factor of at least 0.1 (Nm)/(kg/min), defined by the quotient of its torque (M) divided by the mass flow (m) of spreading material striking this distributor disc at a rotational speed of 900 rev/min, has a discharge angle of at most 3° and a flight circle diameter of at least 65 cm.

**Revendications**

1. Procédé de réglage du débit réel $(\dot{m}_{ist})$ de matière d'épandage d'au moins un organe de dosage réglable d'un épandeur à disques avec au moins un disque d'épandage associé à l'organe de dosage et doté de deux pales d'éjection, un débit théorique $(\dot{m}_{soll})$ de matière d'épandage étant déterminé en fonction d'au moins un paramètre appartenant au groupe constitué par :

- la vitesse d'avancée de l'épandeur à disques ;
- la quantité d'épandage théorique par surface ; et
- la largeur de travail ;

et ce débit théorique ($\dot{m}_{soll}$) est envoyé à un appareil de réglage assisté par ordinateur pour servir de grandeur de guidage, le couple de rotation représentatif du débit réel ($\dot{m}_{ist}$) d'au moins un arbre dans une chaîne d'entraînement du disque d'épandage étant en outre déterminé par voie de capteur pour servir de grandeur de réglage et étant transmis à l'appareil de réglage, à la suite de quoi l'écart du débit réel ($\dot{m}_{ist}$) de matière d'épandage par rapport au débit théorique ($\dot{m}_{soll}$) de matière d'épandage est déterminé et une grandeur de réglage représentative de la position d'ouverture de l'organe de dosage est générée pour régler a posteriori l'organe de dosage sur le débit théorique ($\dot{m}_{soll}$) ;

(a) au moins une première relation fonctionnelle entre le couple de rotation (M) d'un premier disque d'épandage pourvu de deux pales d'éjection et le débit ($\dot{m}$) de matière d'épandage arrivant sur le premier disque d'épandage à au moins une vitesse de rotation (n) prédéfinie de ce disque d'épandage pendant le fonctionnement étant mémorisée dans un dispositif de mémoire associé à l'appareil de réglage, la première relation fonctionnelle prenant en compte un premier facteur géométrique du premier disque d'épandage ; et

(b) dans le dispositif de mémoire associé à l'appareil de réglage :

- au moins une deuxième relation fonctionnelle entre le couple de rotation (M) d'un deuxième disque d'épandage pourvu de deux pales d'éjection et le débit ($\dot{m}$) de matière d'épandage arrivant sur le deuxième disque d'épandage à au moins une vitesse de rotation (n) prédéfinie de ce disque d'épandage pendant le fonctionnement étant mémorisée ; ou
- au moins un facteur de conversion étant mémorisé, celui-ci permettant une conversion de l'au moins une première relation fonctionnelle entre le couple de rotation (M) du premier disque d'épandage et le débit ($\dot{m}$) de matière d'épandage arrivant sur le premier disque d'épandage en au moins une deuxième relation fonctionnelle entre le couple de rotation (M) d'un deuxième disque d'épandage et le débit ($\dot{m}$) de matière d'épandage arrivant sur le deuxième disque d'épandage à au moins une vitesse de rotation (n) prédéfinie de ce disque d'épandage pendant le fonctionnement ;

la deuxième relation fonctionnelle prenant en compte un deuxième facteur géométrique du deuxième disque d'épandage différent du premier facteur géométrique ; sachant qu'en outre

(c) la relation fonctionnelle respective prenant en compte le facteur géométrique respectif d'un disque d'épandage respectif ou le facteur de conversion respectif correspondant est sélectionnée en fonction d'une information représentative du disque d'épandage respectif transmise à l'appareil de réglage ; et

(d) le disque d'épandage respectif est sélectionné en fonction d'au moins une largeur d'épandage et/ou une largeur de travail adaptée pour ce disque d'épandage ;

**caractérisé en ce que** pour au moins une petite largeur d'épandage inférieure à 38 m, notamment inférieure à 35 m, et/ou pour au moins une petite largeur de travail inférieure à 18 m, notamment comprise entre 12 m et 16 m, un disque d'épandage pourvu de deux pales d'éjection est sélectionné présentant un facteur géométrique, défini par le quotient de son couple de rotation (M) divisé par le débit ($\dot{m}$) de matière d'épandage arrivant pendant le fonctionnement sur ce disque d'épandage, d'au moins 0,1 (Nm)/(kg/min) à une vitesse de rotation de 900 Tr/min, le disque d'épandage utilisé avec le facteur géométrique d'au moins 0,1 (Nm)/(kg/min) à une vitesse de rotation de 900 Tr/min étant un disque d'épandage présentant un angle d'éjection de tout au plus 5° et un diamètre de cercle de rotation, dépendant de l'écartement entre les extrémités extérieures des pales d'éjection, d'au moins 60 cm.

2. Procédé selon la revendication 1, **caractérisé en ce que** le disque d'épandage utilisé avec le facteur géométrique d'au moins 0,1 (Nm)/(kg/min) à une vitesse de rotation de 900 Tr/min est un disque d'épandage présentant un angle d'éjection de tout au plus 3° et un diamètre de cercle de rotation d'au moins 65 cm.

3. Procédé selon la revendication 1 ou 2, **caractérisé en ce que** l'information représentative du disque d'épandage respectif et transmise à l'appareil de réglage :

- est amenée dans un dispositif de saisie associé à l'appareil de réglage ; ou
- est générée en fonction d'un code associé à un disque d'épandage respectif détecté par voie de capteur ;

sachant que notamment sur un dispositif d'affichage placé en liaison active avec l'appareil de réglage :

- une information identifiant le disque d'épandage actuellement utilisé est affichée ; et/ou
- un message d'avertissement est généré dès lors que pour une largeur d'épandage inférieure à 35 m donnée et/ou pour une largeur de travail inférieure à 18 m donnée, une information représentative d'un disque d'épandage prévu pour une largeur d'épandage et/ou de travail plus grande est reçue simultanément.

4. Procédé selon l'une quelconque des revendications 1 à 3, **caractérisé en ce qu'**en outre, la vitesse de rotation réelle du disque d'épandage ou d'au moins un arbre dans la chaîne d'entraînement de celui-ci est déterminée par voie de capteur et transmise à l'appareil de réglage, la grandeur de réglage représentative de la position d'ouverture de l'organe de dosage étant en outre générée en fonction de la vitesse de rotation réelle du disque d'épandage ou de l'arbre dans la chaîne d'entraînement de celui-ci, pour régler a posteriori l'organe de dosage sur le débit théorique ($\dot{m}_{soll}$).

5. Procédé selon la revendication 4, **caractérisé en ce que** pour un disque d'épandage respectif, pour une pluralité de vitesses de rotation, une pluralité de relations fonctionnelles entre le couple de rotation (M) de ce disque d'épandage et le débit ($\dot{m}$) de matière d'épandage arrivant sur ce disque d'épandage pendant le fonctionnement ou une pluralité de facteurs de conversion sont mémorisées, notamment sous la forme de lignes caractéristiques, de courbes caractéristiques ou de caractéristiques, prenant en compte le facteur géométrique de ce disque d'épandage.

6. Procédé selon l'une quelconque des revendications 1 à 5, **caractérisé en ce que** le couple de rotation, représentatif du débit réel ($\dot{m}_{ist}$), de l'au moins un arbre dans une chaîne d'entraînement du disque d'épandage est déterminé par voie de capteur en déterminant par voie de capteur :

- la torsion d'au moins un arbre dans une chaîne d'entraînement du disque d'épandage ; et/ou
- la différence de pression d'un moteur hydraulique servant d'entraînement du disque d'épandage ; et/ou
- l'absorption de courant et/ou la chute de tension d'un moteur électrique servant d'entraînement du disque d'épandage.

7. Procédé selon l'une quelconque des revendications 1 à 6, **caractérisé en ce que** le couple de rotation représentatif du débit réel ($\dot{m}_{ist}$) est déterminé par voie de capteur d'une part, notamment à intervalles de temps périodiques, au point mort avec l'organe de dosage fermé et par conséquent le disque d'épandage non chargé, d'autre part avec le disque d'épandage chargé au débit réel ($m_{ist}$), la valeur déterminée au point mort étant soustraite à la valeur totale déterminée en charge pour déterminer seulement la valeur de différence obtenue grâce au débit réel ($\dot{m}_{ist}$) du produit à épandre, cette valeur de différence servant de grandeur de réglage représentative du débit réel ($\dot{m}_{ist}$) pour générer à partir de là la grandeur de réglage représentative de la position d'ouverture de l'organe de dosage et pour régler a posteriori l'organe de dosage sur le débit théorique ($\dot{m}_{soll}$).

8. Épandeur à disques avec au moins un disque d'épandage pourvu de deux pales d'éjection et monté de façon amovible à un arbre de l'épandeur à disques et avec au moins un organe de dosage associé au disque d'épandage et réglable par un appareil de réglage commandé par ordinateur, notamment pour la mise en oeuvre d'un procédé selon l'une quelconque des revendications 1 à 7, l'appareil de réglage étant en liaison active d'une part avec au moins un capteur de détection du couple de rotation, représentatif du débit réel ($\dot{m}_{ist}$), d'au moins un arbre dans une chaîne d'entraînement du disque d'épandage comme grandeur de réglage, d'autre part avec un dispositif de saisie et l'appareil de réglage étant réalisé pour déterminer l'écart du débit réel ($\dot{m}_{ist}$) de matière d'épandage par rapport à un débit théorique ($\dot{m}_{soll}$) servant de grandeur de guidage pouvant être entrée dans le dispositif de saisie de l'appareil de réglage et/ou déterminée par l'appareil de réglage en fonction d'au moins un paramètre pouvant être entré dans son dispositif de saisie et appartenant au groupe constitué par :

- la vitesse d'avancée de l'épandeur à disques ;
- la quantité d'épandage théorique par surface ; et
- la largeur de travail

et l'appareil de réglage étant en outre réalisé pour générer une grandeur de réglage représentative de la position d'ouverture de l'organe de dosage pour régler a posteriori l'organe de dosage sur le débit théorique ($\dot{m}_{soll}$) ;

(a) au moins une première relation fonctionnelle entre le couple de rotation (M) d'un premier disque d'épandage pourvu de deux pales d'éjection et le débit ($\dot{m}$) de matière d'épandage arrivant sur le premier disque d'épandage à au moins une vitesse de rotation (n) prédéfinie de ce disque d'épandage pendant le fonctionnement étant mémorisée dans un dispositif de mémoire associé à l'appareil de réglage, la première relation fonctionnelle prenant en compte un premier facteur géométrique du premier disque d'épandage ; et

(b) dans le dispositif de mémoire associé à l'appareil de réglage :

- au moins une deuxième relation fonctionnelle entre le couple de rotation (M) d'un deuxième disque d'épandage pourvu de deux pales d'éjection et le débit (ṁ) de matière d'épandage arrivant sur le deuxième disque d'épandage à au moins une vitesse de rotation (n) prédéfinie de ce disque d'épandage pendant le fonctionnement étant mémorisée ; ou

- au moins un facteur de conversion étant mémorisé, celui-ci permettant une conversion de l'au moins une première relation fonctionnelle entre le couple de rotation (M) du premier disque d'épandage et le débit (ṁ) de matière d'épandage arrivant sur le premier disque d'épandage en au moins une deuxième relation fonctionnelle entre le couple de rotation (M) d'un deuxième disque d'épandage et le débit (ṁ) de matière d'épandage arrivant sur le deuxième disque d'épandage à au moins une vitesse de rotation (n) prédéfinie de ce disque d'épandage pendant le fonctionnement ;

la deuxième relation fonctionnelle prenant en compte un deuxième facteur géométrique du deuxième disque d'épandage différent du premier facteur géométrique ; sachant qu'en outre

(c) l'appareil de réglage est réalisé pour recevoir une information représentative du disque d'épandage respectif pour sélectionner la relation fonctionnelle respective prenant en compte le facteur géométrique respectif d'un disque d'épandage respectif ou le facteur de conversion respectif correspondant en fonction d'une information représentative du disque d'épandage respectif ; et

(d) la relation fonctionnelle mémorisée pour un disque d'épandage respectif dans le dispositif de mémoire de l'appareil de réglage et prenant en compte le facteur géométrique respectif d'un disque d'épandage respectif ou le facteur de conversion respectif correpondant prenant en compte au moins une largeur d'épandage et/ou une largeur de travail adaptée au disque d'épandage respectif ;

**caractérisé en ce que** dans le dispositif de mémoire associé à l'appareil de réglage pour au moins une petite largeur d'épandage inférieure à 38 m, notamment inférieure à 35 m, et/ou pour au moins une petite largeur de travail inférieure à 18 m, notamment comprise entre 12 m et 16 m :

- au moins une relation fonctionnelle entre le couple de rotation (M) d'un disque d'épandage pourvu de deux pales d'éjection adapté à une telle largeur d'épandage et/ou de travail et le débit (ṁ) arrivant sur ce disque d'épandage ; ou

- au moins un facteur de conversion convertissant l'au moins une première relation fonctionnelle mémorisée du premier disque d'épandage en au moins une relation fonctionnelle entre le couple de rotation (M) d'un disque d'épandage adapté à une telle largeur d'épandage et/ou de travail et le débit (ṁ) arrivant sur ce disque d'épandage ; est mémorisée, la relation fonctionnelle du disque d'épandage pourvu de deux pales d'éjection et adapté à une telle largeur d'épandage et/ou de travail prenant en compte un facteur géométrique, défini par le quotient de son couple de rotation (M) divisé par le débit (ṁ) de matière d'épandage arrivant pendant le fonctionnement sur ce disque d'épandage, d'au moins 0,1 (Nm)/(kg/min) à une vitesse de rotation de 900 Tr/min, le disque d'épandage utilisé avec le facteur géométrique d'au moins 0,1 (Nm)/(kg/min) à une vitesse de rotation de 900 Tr/min présentant un angle d'éjection de tout au plus 5° et un diamètre de cercle de rotation, dépendant de l'écartement entre les extrémités extérieures des pales d'éjection, d'au moins 60 cm.

9. Épandeur à disques selon la revendication 8, **caractérisé en ce que** le disque d'épandage avec le facteur géométrique d'au moins 0,1 (Nm)/(kg/min) à une vitesse de rotation de 900 Tr/min présente un angle d'éjection de tout au plus 3° et un diamètre de cercle de rotation d'au moins 65 cm.

10. Épandeur à disques selon la revendication 8 ou 9, **caractérisé en ce que**

- le dispositif de saisie relié activement à l'appareil de réglage est réalisé pour entrer une information représentative d'un disque d'épandage respectif et pour la transmettre à l'appareil de réglage ; ou

- l'appareil de réglage est relié activement à au moins un capteur de détection de disque d'épandage réalisé pour reconnaître l'information représentative d'un disque d'épandage respectif sous la forme d'un code ainsi que pour transmettre cette information à l'appareil de réglage.

11. Épandeur à disques selon l'une quelconque des revendications 8 à 10, **caractérisé en ce que** l'appareil de réglage est en liaison active avec un dispositif d'affichage, l'appareil de réglage étant notamment réalisé :

- pour afficher une information identifiant le disque d'épandage actuellement utilisé sur le dispositif d'affichage ; et/ou
- pour générer un message d'avertissement sur le dispositif d'affichage dès lors qu'il reçoit, pour une largeur d'épandage inférieure à 35 m donnée et/ou une largeur de travail inférieure à 18 m donnée, simultanément l'information représentative d'un disque d'épandage prévu pour une largeur d'épandage et/ou de travail plus grande.

12. Épandeur à disques selon l'une quelconque des revendications 8 à 11, **caractérisé en ce que** l'appareil de réglage est en outre en liaison active avec au moins un capteur de vitesse de rotation du disque d'épandage ou d'au moins un arbre dans la chaîne d'entraînement de celui-ci, l'appareil de réglage étant en outre réalisé pour générer la grandeur de réglage représentative de la position d'ouverture de l'organe de dosage en fonction de la vitesse de rotation réelle détectée par voie de capteur pour régler a posteriori l'organe de dosage sur le débit théorique ($\dot{m}_{soll}$).

13. Épandeur à disques selon la revendication 12, **caractérisé en ce que** pour un disque d'épandage respectif, une pluralité d'interdépendances fonctionnelles entre le couple de rotation (M) de ce disque d'épandage et le débit (m) de matière d'épandage arrivant sur ce disque d'épandage ou une pluralité de facteurs de conversion sont mémorisées sur le dispositif de mémoire de l'appareil de réglage pour une pluralité de vitesses de rotation, notamment sous la forme de lignes caractéristiques, de courbes caractéristiques ou de caractéristiques, prenant en compte le facteur géométrique de ce disque d'épandage.

14. Épandeur à disques selon l'une quelconque des revendications 8 à 13, **caractérisé en ce que** l'au moins un capteur comprend, pour détecter le couple de rotation représentatif du débit réel ($\dot{m}_{ist}$) d'au moins un arbre dans une chaîne d'entraînement du disque d'épandage :

- un capteur de rotation servant à détecter la rotation de l'arbre dans la chaîne d'entraînement du disque d'épandage ; et/ou
- un capteur de pression servant à détecter la pression d'un moteur hydraulique servant d'entraînement du disque d'épandage ; et/ou
- un capteur de courant ou de tension servant à détecter une chute de courant et/ou de tension d'un moteur électrique servant d'entraînement du disque d'épandage.

15. Épandeur à disques selon l'une quelconque des revendications 8 à 14, **caractérisé en ce que** l'appareil de réglage est réalisé :

- d'une part pour recevoir des signaux de capteur au point mort avec l'organe de dosage fermé et par conséquent le disque d'épandage non chargé, notamment à intervalles de temps périodiques ;
- d'autre part pour recevoir des signaux de capteur de charge avec le disque d'épandage chargé avec le débit réel ($\dot{m}_{ist}$) ;

l'appareil de réglage étant en outre réalisé pour soustraire la valeur déterminée au point mort à la valeur totale déterminée en charge du couple de rotation pour déterminer seulement la valeur de différence obtenue grâce au débit réel ($\dot{m}_{ist}$) du produit à épandre et l'appareil de réglage utilisant cette valeur de différence comme l'au moins une grandeur de réglage déterminée par voie de capteur et représentative du débit réel ($\dot{m}_{ist}$) pour générer à partir de là la grandeur de réglage représentative de la position d'ouverture de l'organe de dosage et pour régler a posteriori l'organe de dosage sur le débit théorique ($\dot{m}_{soll}$).

16. Utilisation d'un jeu de disques d'épandage, comprenant :

- au moins un premier disque d'épandage pourvu de deux pales d'éjection comportant un premier facteur géométrique ($M/\dot{m}_1$), défini par le quotient de son couple de rotation (M) divisé par le débit ($\dot{m}$) de matière d'épandage arrivant pendant le fonctionnement sur ce disque d'épandage, à une vitesse de rotation (n) prédéfinie pendant le fonctionnement ; et
- au moins un deuxième disque d'épandage pourvu de deux pales d'éjection comportant un deuxième facteur géométrique ($M/\dot{m}_2$) différent du premier facteur géométrique ($M/\dot{m}_1$) du premier disque d'épandage, également défini par le quotient de son couple de rotation (M) divisé par le débit ($\dot{m}$) de matière d'épandage arrivant pendant le fonctionnement sur ce disque d'épandage, à une vitesse de rotation prédéfinie pendant le fonctionnement ;

pour un épandeur à disques selon l'une quelconque des revendications 8 à 15, notamment pour la mise en oeuvre d'un procédé selon l'une quelconque des revendications 1 à 7, **caractérisée en ce qu'**au moins un disque d'épandage, pourvu de deux pales d'éjection, du jeu de disques d'épandage, comportant un facteur géométrique, défini par le quotient de son couple de rotation (M) divisé par le débit (ṁ) de matière d'épandage arrivant pendant le fonctionnement sur ce disque d'épandage, d'au moins 0,1 (Nm)/(kg/min) à une vitesse de rotation de 900 Tr/min, est utilisé pour une largeur d'épandage inférieure à 38 m, notamment inférieure à 35 m, et/ou pour une largeur de travail inférieure à 18 m, notamment comprise entre 12 m et 16 m, l'au moins un disque d'épandage présentant un facteur géométrique, défini par le quotient de son couple de rotation (M) divisé par le débit (ṁ) de matière d'épandage arrivant pendant le fonctionnement sur ce disque d'épandage, d'au moins 0,1 (Nm)/(kg/min) à une vitesse de rotation de 900 Tr/min et présentant un angle d'éjection de tout au plus 5° et un diamètre de cercle de rotation, dépendant de l'écartement entre les extrémités extérieures des pales d'éjection, d'au moins 60 cm.

17. Utilisation selon la revendication 16, **caractérisée en ce que** l'au moins un disque d'épandage présentant un facteur géométrique défini par le débit (m) de matière d'épandage arrivant sur ce disque d'épandage divisé par le quotient de son couple de rotation (M) d'au moins 0,1 (Nm)/(kg/min) à une vitesse de rotation de 900 Tr/min comporte un angle d'éjection de tout au plus 3° et un diamètre de cercle de rotation d'au moins 65 cm.

## Fig. 1 [Stand der Technik]

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0982571 A1
- DE 19825917 A1
- DE 19813289 B4
- EP 0963690 A1
- EP 2625945 A1
- DE 202012002455 U1